# EUROPEAN PATENT APPLICATION

(11) **EP 3 996 365 A1**
(43) Date of publication of application: **11.05.2022**
(21) Application number: 21179406.0
(22) Date of filing: 15.06.2021
(51) Int. Cl.: H04N 7/14

(54) **INFORMATION PROCESSING DEVICE AND PROGRAM**

(30) Priority: 10.11.2020 JP 2020187191
(71) Applicant: Fujifilm Business Innovation Corp., Tokyo (JP)
(72) Inventor: TOKUCHI, Kengo, Tokyo (JP)
(74) Representative: Haseltine Lake Kempner LLP

(57) **Abstract**

An information processing device includes a processor configured to change a display mode provided by an online service in which plural participants participate according to an attribute of each participant of the online service.

## Description

### BACKGROUND

### Technical Field

The present invention relates to an information processing device and a program.

### Related Art

Techniques for providing online services such as online conferences are known.

JP-T-H11-502387 discloses a system that provides a closed caption to an electronic conference group.

JP-T-2001-503221 discloses a device that reserves a personal display and a camera for a participant, and thereby allows the participant of a conference to sit like in a normal conference.

JP-A-2004-206363 discloses a system in which an office worker and a teleworker are separated by video.

JP-A-2010-98731 discloses a method of providing personal information related to a determined identity in order to detect a voice input from a participant who is currently speaking, identify the participant, and display the participant at an endpoint of a telephone/television conference.

### SUMMARY

Aspects of non-limiting embodiments of the present disclosure relate to providing display according to an attribute of a participant in an online service.
[1] According to an aspect of the present disclosure, there is provided an information processing device including: a processor configured to change a display mode provided by an online service in which plural participants participate according to an attribute of each participant of the online service.
[2] In the information processing device according to [1], the processor may display images of the plural participants in association with each other on a display based on the attribute of each participant and changes the association according to the attribute of each participant.
[3] In the information processing device according to [2], the processor may display, on the display, images of plural participants having attributes related to each other as participants belonging to a same group.
[4] In the information processing device according to [3], the processor may display the images of the plural participants belonging to the same group in a same display area.
[5] In the information processing device according to [3] or [4], the processor may change a display mode of the images of the participants according to a relationship among the attributes of the participants belonging to the same group.
[6] In the information processing device according to any one of [3] to [5], the processor may display an image of a participant who transmits information and an image of a participant who does not transmit information on the display so as to be distinguished from each other in the images of the plural participants belonging to the same group.
[7] In the information processing device according to [6], the processor may display the image of the participant who transmits information on the display in a manner more conspicuous than a manner in which the image of the participant who does not transmit information is displayed.
[8] In the information processing device according to any one of [2] to [7], the processor may display an image of a non-participant who is registered in the online service but is not participating in the online service and an image of a participant of the online service on the display so as to be distinguished from each other.
[9] In the information processing device according to any one of [2] to [8], the processor may arrange the images of the participants at positions closer to each other for the participants whose attributes are more highly related to each other.
[10] In the information processing device according to [2], the processor may arrange images of groups at positions closer to each other for the groups whose attributes are higher related.
[11] In the information processing device according to [1], the online service may be a service for providing a content, the attribute of the participant may be a position of a virtual seat for watching the content, and the processor may change a display mode of the content to be provided to the participant according to the position of the virtual seat.
[12] In the information processing device according to [11], the processor may display, on the display, a comment of the participant on the content with a different priority according to a usage fee of the online service paid by the participant.
[13] In the information processing device according to [11], when the participant changes the position of the virtual seat while the content is being provided, the processor may change the display mode of the content provided to the participant according to a changed position of the virtual seat.
[14] In the information processing device according to [3], the online service may be a service for providing online shopping, and the processor may display, on the display, a comment of the participant on a product introduced in the online shopping, the comment being grouped based on the attribute of the participant.
[15] In the information processing device according to any one of [1] to [14], the processor may change sound to be provided to a participant according to an attribute of the participant.
[16] In the information processing device according to [1], the online service may be an online game, and the processor may display, on the display, a main display area where a play image of a player who is a participant of the online game is displayed and plural sub-display areas where play images of plural other players who are other participants are displayed, and display, on the display, the plural sub-display areas in association with each other based on attributes of the plural other participants.
[17] In the information processing device according to [16], in response to an operation on a sub-display area, the processor may further display the play image displayed in the sub-display area in the main display area.
[18] In the information processing device according to [16] or [17], in response to a designation of a sub-display area, the processor may further enlarge the sub-display area that is designated and display the enlarged sub-display area.
[19] In the information processing device according to [1], in the online service, plural participants may give a presentation in order, and the processor may display, on the display, an image of each participant who gives the presentation in a display area where the image of the participant who gives the presentation is displayed, and change a position where the image of each participant who gives the presentation is displayed according to the order.
[20] In the information processing device according to [19], the processor may display an image of a participant who is currently giving a presentation in a specific display area on the display, and change the image of the participant displayed in the specific display area according to the order.
[21] In the information processing device according to [19] or [20], in response to an image of a participant who is not giving the presentation being moved to the display area where the image of the participant who gives the presentation is displayed, the processor may determine the participant of the moved image as a participant who gives the presentation.
[22] In the information processing device according to [19], the processor may display a thumbnail image of a material to be presented by the participant near the image of the participant who gives the presentation.
[23] In the information processing device according to [22], in response to the thumbnail image being selected, the processor may display details of the material or downloads the material.
[24] In the information processing device according to [1], the online service may be a distribution service of an online game, and, in response to information on a viewer of the online game being moved to an area where a play image of the online game is displayed on the display, the processor may register the viewer as a player of the online game.
[25] According to another aspect of the present disclosure, there is provided a program causing a computer to execute a process including: changing a display mode provided by an online service in which plural participants participate according to an attribute of each participant of the online service.

According to the invention of [1] and [25], display according to the attribute of the participant in the online service may be provided.

According to the invention of [2], the image of each participant may be displayed in the display mode according to the attribute of each participant.

According to the invention of [3] and [4], the images of the plural participants having the attributes related to each other may be displayed as one group.

According to the invention of [5], the relationship between the plural participants belonging to the same group may be shown.

According to the invention of [6] and [7], the participant who transmits the information may be distinguished from the participant who does not transmit the information.

According to the invention of [8], the participant may be distinguished from the non-participant.

According to the invention of [9], a relationship between the plural participants may be shown.

According to the invention of [10], a relationship between the plural groups may be shown.

According to the invention of [11] and [13], display according to the position of the virtual seat may be provided.

According to the invention of [12], the comment of the participant may be displayed according to the priority due to the usage fee.

According to the invention of [14], the comments of participants may be distinguished for each group.

According to the invention of [15], the voice according to the attribute of the participant may be provided.

According to the invention of [16], a relationship between other participants in the online game may be shown.

According to the invention of [17], the play image displayed in the sub-display area may be watched in the main display area.

According to the invention of [18], the play image displayed in the sub-display area may be confirmed in more detail as compared with a case where a size of the sub-display area is maintained.

According to the invention of [19], the order of participants who give the presentation may be confirmed.

According to the invention of [20], the participant who is currently giving a presentation may be confirmed.

According to the invention of [21], the participant may be registered as the participant who gives the presentation by an operation of moving the image of the participant.

According to the invention of [22] and [23], the participant may confirm the material to be presented.

According to the invention of [24], the viewer may be registered as the player of the online game by an operation of moving the information on the viewer of the online game.

### BRIEF DESCRIPTION OF DRAWINGS

Exemplary embodiment(s) of the present invention will be described in detail based on the following figures, wherein:
Fig. 1 is a block diagram showing a configuration of an information processing system according to an exemplary embodiment;
Fig. 2 is a block diagram showing a configuration of a server according to an exemplary embodiment;
Fig. 3 is a block diagram showing a configuration of a terminal device according to an exemplary embodiment;
Fig. 4 is a view showing a screen according to an exemplary embodiment;
Fig. 5 is a view showing a screen according to an exemplary embodiment;
Fig. 6 is a view showing a screen according to an exemplary embodiment;
Fig. 7 is a view showing a screen according to an exemplary embodiment;
Fig. 8 is a view showing a screen according to an exemplary embodiment;
Fig. 9 is a view showing a screen according to an exemplary embodiment;
Fig. 10 is a view showing a screen according to an exemplary embodiment;
Fig. 11 is a view schematically showing a stadium according to an exemplary embodiment;
Fig. 12 is a view showing a screen according to an exemplary embodiment;
Fig. 13 is a view showing a screen according to an exemplary embodiment;
Fig. 14 is a view showing a screen according to an exemplary embodiment;
Fig. 15 is a view showing a screen according to an exemplary embodiment;
Fig. 16 is a view showing a screen according to an exemplary embodiment;
Fig. 17 is a view showing a screen according to an exemplary embodiment;
Fig. 18 is a view showing a screen according to an exemplary embodiment;
Fig. 19 is a view showing a screen according to an exemplary embodiment;
Fig. 20 is a view showing a screen according to an exemplary embodiment;
Fig. 21 is a view showing a screen according to an exemplary embodiment;
Fig. 22 is a view showing a screen according to an exemplary embodiment;
Fig. 23 is a view showing a screen according to an exemplary embodiment.
Fig. 24 is a view showing a screen according to an exemplary embodiment;
Fig. 25 is a view showing a screen according to an exemplary embodiment;
Fig. 26 is a view showing a screen according to an exemplary embodiment; and
Fig. 27 is a view showing a screen according to an exemplary embodiment.

### DETAILED DESCRIPTION

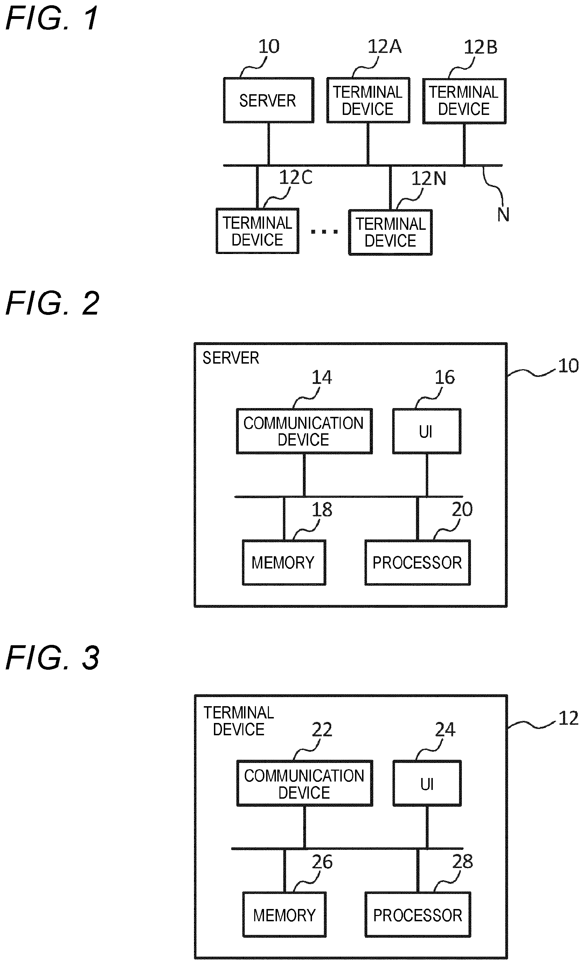

An information processing system according to an exemplary embodiment will be described with reference to Fig. 1. Fig. 1 shows an example of a configuration of the information processing system according to the present exemplary embodiment.

The information processing system according to the present exemplary embodiment includes, for example, a server 10 and N terminal devices (N is an integer of 1 or more). In the example shown in Fig. 1, the information processing system according to the present exemplary embodiment includes terminal devices 12A, 12B, 12C to 12N. The number of terminal devices shown in Fig. 1 is merely an example, and one or more terminal devices may be included in the information processing system according to the present exemplary embodiment. Hereinafter, when it is not necessary to distinguish between the terminal devices 12A, 12B, 12C to 12N, these will be referred to as a "terminal device 12". The information processing system according to the present exemplary embodiment may include devices other than the server 10 and the terminal device 12.

The server 10 and the terminal devices 12 have a function of communicating with other devices. The communication may be wired communication using a cable or wireless communication. That is, each device may be physically connected to another device by a cable to transmit and receive information, or may transmit and receive information by wireless communication. The wireless communication is, for example, short-range wireless communication or Wi-Fi (registered trademark). The short-range wireless communication is, for example, Bluetooth (registered trademark), radio frequency identifier (RFID) or NFC. For example, each device may communicate with another device via a communication path N such as a local area network (LAN) or the Internet.

The server 10 provides an online service. A user may participate in the online service and use the online service by operating the terminal device 12. The user may use individual services provided by the online service. Hereinafter, the user participating in the online service will be referred to as a "participant".

The participant is the user who logs in to the online service and uses the online service. The user who logs in to the online service but then logs out is not the participant of the online service, but a non-participant who does not participate in the online service. A function of temporarily stopping the use of the online service even when the user is logging in to the online service may be provided. The user who does not temporarily use the online service even while logging in to the online service is not the participant of the online service, but the non-participant who does not participate in the online service.

For example, the server 10 determines the user who has registered his/her own account information (for example, a user ID and a password) in the online service as the participant, and provides the online service to the user. The server 10 may determine, as the participant (for example, a guest user), the user who has requested the use of the online service without registering his/her own account information in the online service, and provide the online service to the user.

The online service is, for example, an online conference, a service for providing content online, an online game, online shopping, a social network service (SNS) or a combination thereof. The online conference may be referred to as a Web conference, a remote conference, a video conference or the like. The participant may exchange information with another participant by using the online conference. The content is, for example, entertainment (for example, concert, play, movie, video or music), sports or e-sports. For example, a video distribution service or a music distribution service is an example of a service for providing the content online. The participant may watch the entertainment online, and watch the sports and the e-sports.

The online service may be a service that uses a virtual space or a service that does not use a virtual space. The virtual space is a concept to be compared with a real space, and is, for example, a virtual space realized by a computer, a virtual space formed on a network such as the Internet, a virtual space realized by a virtual reality (VR) technology, or a cyber space. For example, a virtual three-dimensional space or a two-dimensional space corresponds to an example of the virtual space.

The information exchanged or provided in the online service is, for example, image data (for example, still image data or moving image data), data representing a character string such as a message or a comment (for example, document data or text data), audio data such as music data, control data for controlling a device, or a combination thereof.

The server 10 stores and manages account information of the user who uses the online service. The account information is information for logging in to the online service and using the online service, and is, for example, information including the user ID and the password. For example, by transmitting the account information to the server 10 and logging in to the online service, the user associated with the account information is permitted to participate in the online service and use the online service. Of course, the user may be able to use the online service without registering his/her own account information in the online service.

The server 10 stores and manages information indicating attributes of the user who uses the online service. Hereinafter, the information indicating the attributes of the user is referred to as "attribute information". The attribute information of the user is, for example, included in the account information of the user and stored in the server 10.

The attributes of the user are, for example, the sex, age, occupation, company to which the user belongs, department to which the user belongs, job type, hobby, preference, height, weight, blood type, birthplace, address, qualification and contact information (for example, telephone number, e-mail address and SNS account). Of course, attributes other than these may be the attributes of the user.

In order to use the online service, the attributes of the user may be registered in the server 10, or the attributes of the user may not be registered in the server 10. That is, the user may use the online service by registering his/her own attributes in the server 10, or may use the online service without registering his/her own attributes in the server 10. Some or all of the plural attributes may be registered in the server 10.

The terminal device 12 is, for example, a personal computer (hereinafter referred to as a "PC"), a tablet PC, a smartphone, a wearable device (for example, an AR glass, a VR glass or a hearable device) or a mobile phone. When the user uses the online service, the terminal device 12 is used. For example, when the account information is input to the terminal device 12, the account information is transmitted to the server 10. When authentication of the user is successful, the user logs in to the online service.

In the present exemplary embodiment, N persons (N is an integer of 1 or more) use the online service. For example, each user uses the online service by operating his/her own terminal device 12. For example, a user A uses the terminal device 12A, a user B uses the terminal device 12B, and a user C uses the terminal device 12C. The same applies to other users.

For example, the user A is permitted to log in to the online service and use the online service by operating the terminal device 12A. The same applies to other users. Plural users may separately log in to the online service and use the online service by operating the same terminal device 12. For example, the users A, B may separately log in to the online service by operating the same terminal device 12A, and use the online service.

Hereinafter, a hardware configuration of the server 10 will be described with reference to Fig. 2. Fig. 2 shows an example of the hardware configuration of the server 10.

The server 10 includes, for example, a communication device 14, a UI 16, a memory 18 and a processor 20.

The communication device 14 is a communication interface including a communication chip, a communication circuit and the like, and has a function of transmitting information to another device and a function of receiving information from another device. The communication device 14 may have a wireless communication function or a wired communication function. The communication device 14 may communicate with another device by using, for example, the short-range wireless communication, or may communicate with another device via the communication path N.

The UI 16 is a user interface and includes at least one of a display and an operation device. The display is a display device such as a liquid crystal display or an EL display. The operation device is a keyboard, an input key, an operation panel or the like. The UI 16 may be a UI such as a touch panel including both a display and an operation device.

The memory 18 is a device constituting one or more storage areas for storing various types of information. The memory 18 is, for example, a hard disk drive, various memories (for example, a RAM, a DRAM or a ROM), other storage devices (for example, an optical disk) or a combination thereof. One or more memories 18 are included in the server 10.

For example, the memory 18 stores the account information of the user who is permitted to use the online service. The account information of the user who is permitted to use the online service may be stored in a device other than the server 10 (for example, an authentication server). A device such as the authentication server authenticates the user who attempts to log in to the online service, and the server 10 provides the online service to the user who has succeeded in the authentication.

The processor 20 is configured to control an operation of each unit of the server 10. The processor 20 may include a memory.

In the present exemplary embodiment, the processor 20 provides the online service to the user. For example, when plural participants participate in the online service, the processor 20 changes a display mode provided by the online service according to the attributes of the participants of the online service. The processor 20 may display images of the plural participants in association with each other on the display based on the attributes of each participant, and change the association according to the attributes of each participant. The processor 20 may display the images of the plural participants on the display as participants belonging to the same group, the participants having attributes related to each other. The processor 20 may display the images of the plural participants belonging to the same group in the same display area.

An automatic response partner such as a chatbot may participate in the online service as the participant. The user may exchange information with the automatic response partner. For example, the automatic response partner may function as a response assistant who responds to an inquiry from the user, receive an utterance of the user, analyze content of the utterance, create an answer to the utterance, and notify the user of the answer. The automatic response partner is realized by, for example, executing a program. The program is stored in, for example, the server 10 or another device (for example, another server or the terminal device 12). The automatic response partner may be realized by artificial intelligence (AI). An algorithm used in the artificial intelligence may be any algorithm.

Hereinafter, a hardware configuration of the terminal device 12 will be described with reference to Fig. 3. Fig. 3 shows an example of the hardware configuration of the terminal device 12.

The terminal device 12 includes, for example, a communication device 22, a UI 24, a memory 26 and a processor 28.

The communication device 22 is a communication interface including a communication chip, a communication circuit and the like, and has a function of transmitting information to another device and a function of receiving information transmitted from another device. The communication device 22 may have a wireless communication function or a wired communication function. The communication device 22 may communicate with another device by using, for example, the short-range wireless communication, or may communicate with another device via the communication path N.

The UI 24 is a user interface and includes at least one of a display and an operation device. The display is a display device such as a liquid crystal display or an EL display. The operation device is a keyboard, an input key, an operation panel or the like. The UI 24 may be a UI such as a touch panel including both a display and an operation device. The UI 24 may include a microphone and a speaker.

The memory 26 is a device constituting one or more storage areas for storing various types of information. The memory 26 is, for example, a hard disk drive, various memories (for example, a RAM, a DRAM or a ROM), other storage devices (for example, an optical disk) or a combination thereof. One or more memories 26 are included in the terminal device 12.

The processor 28 is configured to control an operation of each unit of the terminal device 12. The processor 28 may include a memory.

For example, the processor 28 displays on the display of the terminal device 12 an image, a text or the like provided by the online service, or allows the speaker to generate a voice, music or the like provided by the online service.

Hereinafter, examples of the present exemplary embodiment will be described. The processor 20 of the server 10 or the processor 28 of the terminal device 12 may execute processing according to the examples, or the processor 20 and the processor 28 may cooperate with each other to execute processing according to the examples. A part of certain processing may be executed by the processor 20, and the other part of the processing may be executed by the processor 28. The server 10, the terminal device 12 or a combination thereof corresponds to an example of an information processing device according to the present exemplary embodiment.

### (Example 1)

Hereinafter, Example 1 will be described. An online service according to Example 1 is an online conference, and plural participants participate in the online conference. Each participant logs in to the online conference and participates in the online conference by operating his/her own terminal device 12. Images of the participants participating in the online conference are displayed on a display of the terminal device 12 of each participant. A participant or an administrator who has authority may permit or deny participation of each user in the online conference. In this case, the user who is permitted to participate in the online conference may participate in the online conference. When the participant invites another user to the online conference and the another user indicates an intention to participate, the another user may be able to participate in the online conference.

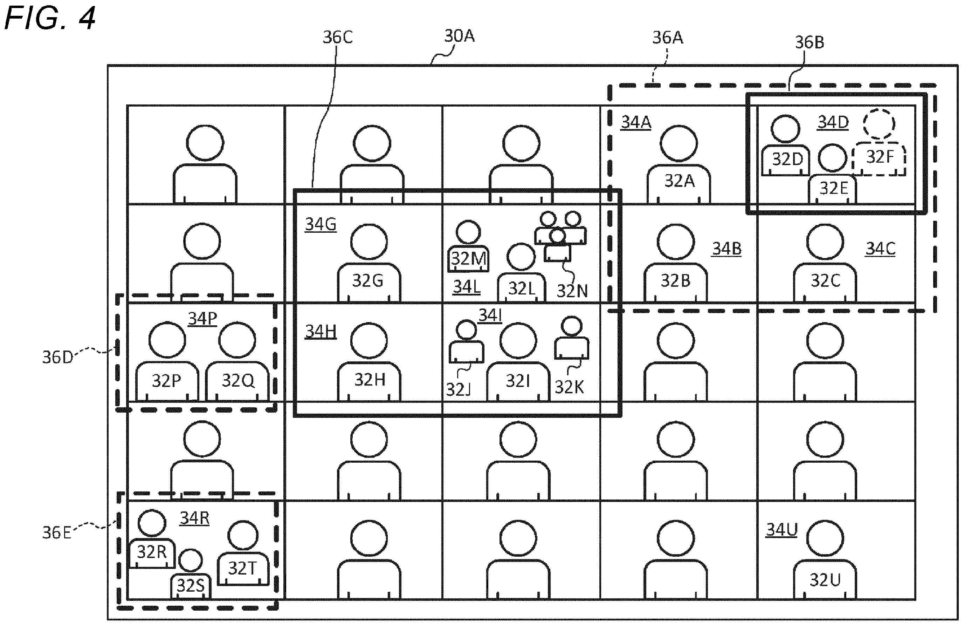

Fig. 4 shows a screen 30A. The screen 30A is a screen displayed on a display of the terminal device 12A of the user A participating in the online conference. A screen similar to the screen 30A is also displayed on the display of the terminal device 12 of the participant other than the user A.

The plural participants participate in the online conference, and the images representing the participants participating in the online conference are displayed on the screen 30A. Hereinafter, the image representing the participant is referred to as a "participant image". The participant images of all the participants may be displayed, or some of the participant images may be displayed. The participant image to be displayed may be designated by the user A, or the participant may designate display or non-display of his/her own participant image. The participant image may be an image generated by capturing the participant with a camera, or may be a schematic image (for example, an icon or an avatar) representing the participant. The participant image may be a still image or a moving image. The camera may be provided in the terminal device 12 or may not be provided in the terminal device 12. Data of the participant image generated by capturing of the camera is transmitted from the terminal device 12 of the participant to the terminal device 12 of another participant via the server 10, and the participant image is displayed on the display of the terminal device 12 of each participant. A voice of the participant is collected by the microphone, data of the voice is transmitted from the terminal device 12 of the participant to the terminal device 12 of another participant via the server 10, and the voice of the participant is emitted from a speaker of the terminal device 12 of each participant or a speaker not provided in the terminal device 12. An utterance of the participant may be displayed as a character string. Each participant may exchange information such as the voice, the image and the character string with another participant through the online conference.

The processor 20 of the server 10 displays the participant images in association with each other on the display of each terminal device 12 based on attributes of each participant. Displaying the participant images in association with each other means, for example, displaying the images of the plural participants on the display as the participants belonging to the same group, the participants having attributes related to each other. Specifically, the participant images of the plural participants belonging to the same group are displayed in the same display area. The processor 28 of each terminal device 12 may receive information indicating the attributes of each participant from the server 10 and display the participant images in association with each other on the display of the terminal device 12 based on the attributes of each participant, or may receive a display instruction of the participant images from the processor 20 of the server 10 and display the participant images in association with each other on the display of the terminal device 12 according to the display instruction.

In the example shown in Fig. 4, a participant image 32A representing the user A is displayed in a display area 34A. A participant image 32B representing the user B is displayed in a display area 34B. A participant image 32C representing the user C is displayed in a display area 34C. A participant image 32D representing a user D, a participant image 32E representing a user E and a participant image 32F representing a user F are displayed in a display area 34D.

The users A, B, C, D, E, F have common attributes. For example, the users A, B, C, D, E, F belong to a same company A. That is, the users A, B, C, D, E, F have the attributes related to each other. In this case, the processor 20 displays the participant images 32A, 32B, 32C, 32D, 32E, 32F in association with each other on the screen 30A, with the users A, B, C, D, E, F as the participants belonging to the same group. For example, the processor 20 displays the participant images 32A, 32B, 32C, 32D, 32E, 32F in a display area surrounded by a same frame 36A. In the example shown in Fig. 4, the processor 20 arranges the display areas 34A, 34B, 34C, 34D adjacent to each other on the screen 30A, and surrounds the display areas 34A, 34B, 34C, 34D with the same frame 36A. Thereby, the participant images 32A, 32B, 32C, 32D, 32E, 32F are displayed in the display area surrounded by the same frame 36A.

The users D, E, F belong to a same department α in the company A. In this case, the processor 20 displays the participant images 32D, 32E, 32F in association with each other on the screen 30A with the users D, E, F as the participants belonging to the same group. For example, the processor 20 displays the participant images 32D, 32E, 32F in the display area 34D surrounded by a same frame 36B. In this way, the participant images may be displayed hierarchically. For example, a large frame, a medium frame smaller than the large frame, and a small frame smaller than the medium frame are formed. The medium frame is displayed in the large frame, the small frame is displayed in the medium frame, and the participant images are displayed in the frames according to the attributes. Of course, a finer frame may be formed according to the attributes.

Users G, H, I, J, K, L, M and a user group N have common attributes. For example, the users G, H, I, J, K, L, M and the user group N belong to a same company B. In this case, the processor 20 displays a participant image 32G representing the user G, a participant image 32H representing the user H, a participant image 32I representing the user I, a participant image 32J representing the user J, a participant image 32K representing the user K, a participant image 32L representing the user L, a participant image 32M representing the user M, and a participant image 32N representing the user group N in association with one another on the screen 30A, with the users G, H, I, J, K, L, M and the user group N as the participants belonging to the same group. For example, the processor 20 displays the participant images 32G, 32H, 321, 32J, 32K, 32L, 32M, 32N in a display area surrounded by a same frame 36C. In the example shown in Fig. 4, the processor 20 surrounds the display areas 34G, 34H, 341, 34L with the same frame 36C. Thereby, the participant images 32G, 32H, 321, 32J, 32K, 32L, 32M, 32N are displayed in the display area surrounded by the same frame 36C.

The users I, J, K belong to the same department in the company B. In this case, the processor 20 displays the participant images 321, 32J, 32K in the same display area 341 with the users I, J, K as the participants belonging to the same group. A frame surrounding the display area 341 may be displayed.

The users L, M and the user group N belong to the same department in the company B. In this case, the processor 20 displays the participant images 32L, 32M, 32N in the same display area 34L with the users L, M and the user group N as the participants belonging to the same group. A frame surrounding the display area 34L may be displayed.

Since users P, Q belong to the same group, a participant image 32P representing the user P and a participant image 32Q representing the user Q are displayed in the same display area. Similarly, since users R, S, T belong to the same group, a participant image 32R representing the user R, a participant image 32S representing the user S, and a participant image 32T representing the user T are displayed in the same display area.

The participant images of the participants who do not form a group together with other participants are independently displayed in a display area. For example, since a user U does not form a group together with other participants, a participant image 32U representing the user U is independently displayed in a display area 34U.

The participant images of the participants whose attributes are not registered in the server 10 are independently displayed in a display area.

In the example shown in Fig. 4, for example, the participant images of the participants belonging to the same company are displayed in the same frame. As another example, the participant images of plural participants having a specific attribute relationship may be displayed in the same frame. For example, a participant image of a boss and a participant image of a subordinate may be displayed in the same frame, or may be displayed in different frames.

A screen the same as the screen 30Ais displayed on the display of the terminal device 12 of another participant (for example, the terminal device 12B of the user B). Thereby, the plural participants may share the same situation.

Each participant may set a condition of what kind of attributes should the plural participants have such that the participant images thereof are displayed in the same frame. When different conditions are set for each participant, plural participant images are displayed on the display of the terminal device 12 of each participant in a different arrangement relationship. When a condition set by the user A is different from a condition set by the user B, the participant images are displayed on the display of the terminal device 12B of the user B, but the participant images are displayed in an arrangement relationship different from an arrangement relationship of the participant images displayed on the screen 30A.

The processor 20 may change a display mode of the participant images of the participants according to a relationship between the attributes of the participants belonging to the same group. For example, a main participant and a sub-participant may be determined based on the attributes of each participant. The processor 20 may display the participant images on the display in a mode in which the participant image of the main participant is more conspicuous than the participant image of the sub-participant. For example, the processor 20 may change a size of the participant image of each participant, a color of the participant image of each participant, a decoration of the participant image of each participant, or display a character string associated with the participant image of each participant, according to the relationship between the attributes of each participant. In a specific example, when the boss is the main participant and the subordinate is the sub-participant, the processor 20 displays the participant image of the boss larger than the participant image of the subordinate. In addition, the processor 20 may display a participant image of a group reader or a representative larger than the other participant images.

The processor 20 may display a participant image of a participant who transmits information and a participant image of a participant who does not transmit information on the display so as to be distinguished from each other for the participant images of the plural participants belonging to the same group. The distinction is performed by, for example, the size of the participant image, the color of the participant image, the decoration of the participant image, or the character string associated with the participant image. The participant who transmits the information may be determined as the main participant, and the participant who does not transmit the information may be determined as the sub-participant. For example, the processor 20 displays the participant images on the display in a mode in which the participant image of the participant who transmits the information is more conspicuous than the participant image of the participant who does not transmit the information.

The information here is audio data, image data, character string data or a combination thereof. Transmission of information is to transmit the audio data, the image data, the character string data or the combination thereof. For example, when a participant of an online conference emits a voice, the audio data is transmitted to the terminal devices 12 of other participants participating in the online conference, and the voice is output from the speaker of the terminal device 12 or other speakers of other participants. In this case, the participant who emits the voice is a user who transmits information. The participant who transmits the image data or the character string data is also the user who transmits the information.

For example, the processor 20 makes a participant image of a participant who speaks (for example, a participant image of a participant who emits a voice) larger than a participant image of a participant who does not speak. When plural participants belonging to the same group speak, the processor 20 makes participant images of the plural participants larger than a participant image of a participant who does not speak belonging to the same group. In a specific example, when the user A belonging to the company A speaks and the users B, C, D, E, F do not speak, the processor 20 displays the participant image 32A of the user A larger than the participant images 32B, 32C, 32D, 32E, 32F. When the user D belonging to the department α of the company A speaks and the users E, F do not speak, the processor 20 makes the participant image 32D of the user D larger than the participant images 32E, 32F. At this time, the processor 20 may display the participant image 32D larger than the participant images of the participants who belong to the company A but do not belong to the department α (for example, the participant images 32A, 32B, 32C), or may display the participant image 32D larger than the participant images 32E, 32F without considering sizes of the participant images 32A, 32B, 32C. Of course, the processor 20 may distinguish the participant image of the participant who speaks from the participant image of the participant who does not speak by a method other than changing the size of the participant image.

The processor 20 may switch between a main display and a sub-display depending on whether the participant transmits the information. For example, the processor 20 may determine a participant who transmits information as the main participant, and a participant who does not transmit information as the sub-participant, and switch display of the participant images of the participants.

Even in a case of a participant image of a participant who does not actually participate in an online conference, there is a specific relationship between attributes of the participant and attributes of another participant who participates in the online conference. In this case, the processor 20 may display the participant image of the participant who does not actually participate in the online conference on the screen.

For example, the processor 20 distinguishes a participant image of a non-participant who is a user registered in the online conference but not participating in the online conference from a participant image of a participant of the online conference, and displays the participant images on the display. The non-participant here may be, for example, a user who has not logged in to the online conference but has account information registered in the server 10, or a user who has logged in to the online conference but has temporarily left the conference (for example, a user who has temporarily stopped using the online conference).

In the example shown in Fig. 4, the user F is a non-participant. For example, when the user F temporarily stops using the login conference after logging in to the online conference, the processor 20 determines the user F as the non-participant. In this case, the processor 20 distinguishes the participant image of the non-participant from the participant image of the participant and displays these participant images such that the participant image 32F of the user F may be identified as the participant image of the non-participant. For example, the processor 20 displays the participant image 32F in gray, surrounds the participant image 32F with a frame having a specific color, or displays a character string indicating the non-participant near the participant image 32F.

As another example, when the user F has not logged in to the online conference but there is a specific relationship between attributes of the user F and attributes of the participant, the processor 20 determines the user F as the non-participant and displays the participant image of the user F in the same manner as described above. As described above, since the user F belongs to the company A and further belongs to the department α, the processor 20 displays the participant image 32F of the user F in the frame 36B.

The processor 20 may collectively display the participant images of a predetermined number of participants or more. For example, the user group N includes three participants, and the participant image 32N is an image collectively representing the three participants.

The processor 20 may arrange the participant images of the participants at positions closer to each other and display the participant images on the display for the participants whose attributes are higher related. For example, the processor 20 arranges the participant images of the participants belonging to the same company at positions closer to each other than the participant images of the participants not belonging to the same company, arranges the participant images of the participants belonging to the same industry at positions closer to each other than the participant images of the participants not belonging to the same industry, arranges the participant images of the participants having the same hobby at positions closer to each other than the participant images of the participants not having the same hobby, or arranges the participant images of the participants living in the same area at positions closer to each other than the participant images of the participants not living in the same area. As attributes other than these, the processor 20 may change arrangement of the participant images according to the preference, age, sex or the like of the user.

The processor 20 may arrange the participant images of the participants at positions closer to each other for the participants whose number of common attributes is larger. For example, when the user A and the user B have the same hobby, preference and living area, and the user A and the user C have the same hobby and preference, the processor 20 arranges and displays a participant image of the user B at a position closer to a participant image of the user A than a participant image of the user C.

The processor 20 may arrange the images of the groups (that is, the participant images of the participants belonging to the groups) closer to each other and display the images on the display for the groups whose attributes are higher related.

For example, when grouping is performed in the companies to which the participants belong, the processor 20 displays images of the companies belonging to the same industry (that is, the participant images of the participants belonging to the companies) at positions closer to each other than images of the companies belonging to different industries.

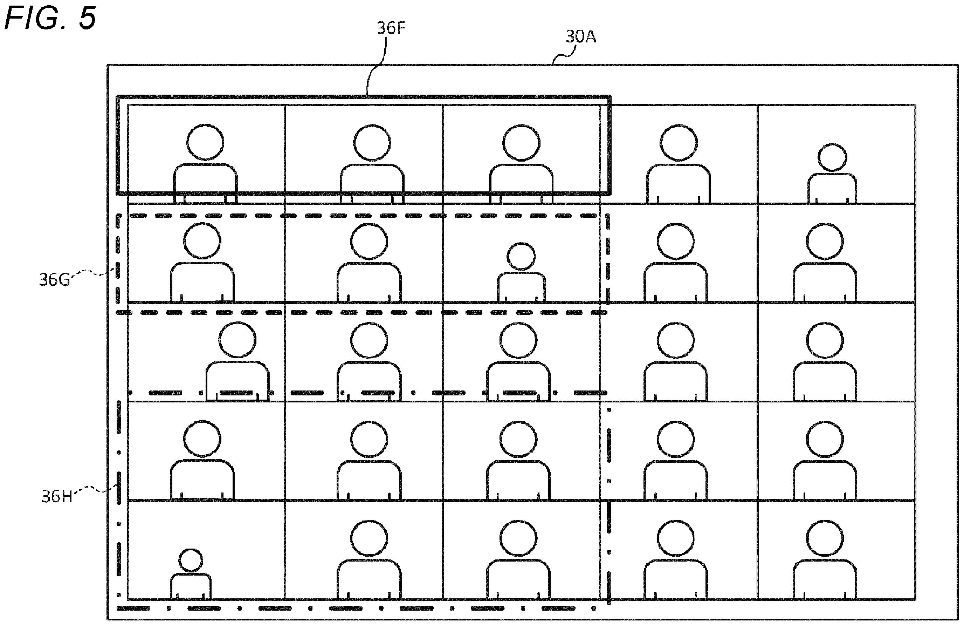

When grouping is performed in the industries to which the participants belong, the processor 20 displays the participant images of the participants belonging to the same industry at positions closer to each other than the participant images of the participants belonging to different industries. Fig. 5 shows the screen 30A for describing an example of this processing. As in the example shown in Fig. 4, the participant images of the participants participating in the online conference are displayed on the screen 30A.

For example, the participant images surrounded by a frame 36F are images representing the participants belonging to a precision equipment industry. The participant images surrounded by a frame 36G are images representing the participants belonging to an IT industry. The participant images surrounded by a frame 36H are images representing the participants belonging to a food industry. The participants belonging to the same industry may be participants belonging to the same company or participants belonging to different companies.

For example, since the IT industry is more highly related to the precision equipment industry than the food industry, the processor 20 arranges the participant images of the participants belonging to the IT industry (that is, the participant images surrounded by the frame 36G) at positions closer to the participant images of the participants belonging to the precision equipment industry (that is, the participant images surrounded by the frame 36F) than the participant images of the participants belonging to the food industry (that is, the participant images surrounded by the frame 36H), and displays the participant images on the screen 30A.

When the user has plural attributes, the user may participate in the online conference by changing the attributes for each online conference. The user may designate the attributes before participating in the online conference, or may change the attributes while participating in the online conference. For example, when the user has a part-time job, that is, when the user has plural occupations, one or more occupations among the plural occupations may be designated as attributes to participate in the online conference. In this case, the processor 20 determines the one or more designated occupations as the attributes of the user, and executes the processing according to Example 1 described above.

For example, it is assumed that the user is engaged in a job in the food industry and a job in a legal industry. When the user participates in an online conference in the food industry, the processor 20 may display information on attributes to be displayed in the food industry, or may display only a name of a company to which the user belongs. When the user participates in an online conference in the legal industry, the processor 20 displays information on attributes to be displayed in the legal industry, and changes and displays a name of a company to which the user belongs. Of course, the processor 20 may display information of all attributes in any online conference, display a part of common information, or allow the user to switch the display. In a specific industry, a specific attribute may have an important meaning. For example, the attribute is qualification. In a specific example, when the user participates in the online conference in the legal industry, it is important whether the user has legal qualification.

The user may log in to the same online service using the same terminal device 12 with user accounts for plural people. When the same terminal device 12 is used to participate in the same online conference with the user accounts for the plural people, the user accounts may be assumed as belonging to the same group, and attribute information may be automatically assigned to the user accounts. Of course, the processor 20 may individually assign the attribute information to the user accounts. For example, the processor 20 may provide an option that allows performing such a manner of assignment at the time of login, and change the display of the attributes according to a rule of assignment of the attributes determined by each user.

Hereinafter, a modification of Example 1 will be described.

The processor 20 may change a shape of the frame surrounding the participant images according to the number of participants in the online conference. The shape of the frame is, for example, a square, a circle, an ellipse or a triangle. Of course, the shape of the frame may be a shape other than these, or may be a shape set by the user.

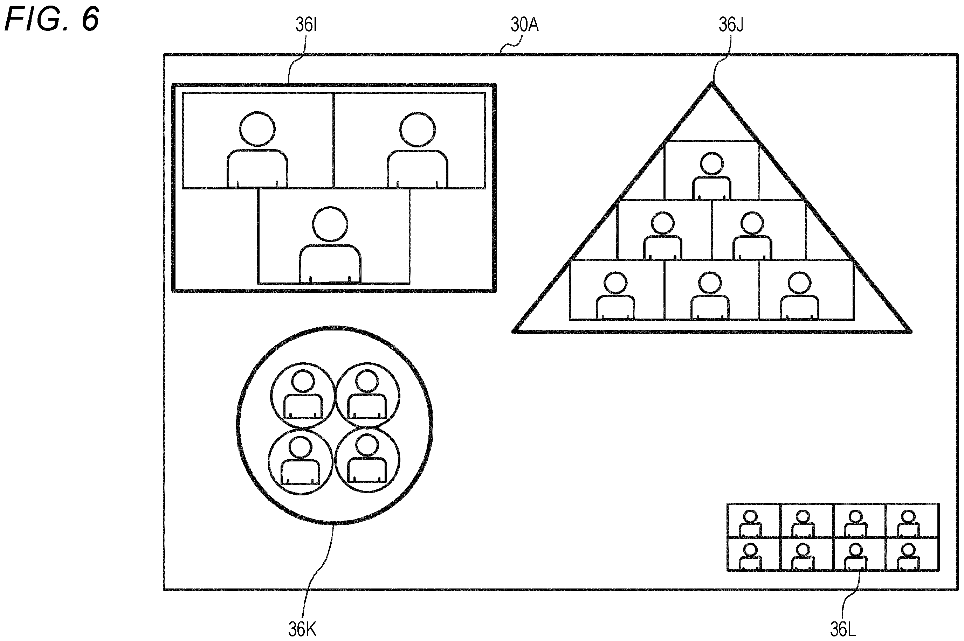

Fig. 6 shows examples of frames. Fig. 6 shows the screen 30A. For example, a rectangular frame 36I, a triangular frame 36J and a circular frame 36K are displayed on the screen 30A. Three participant images are displayed in the frame 361, and each participant image is displayed in a rectangular display area. Six participant images are displayed in the frame 36J, and each participant image is displayed in a rectangular display area. Four participant images are displayed in the frame 36K, and each participant image is displayed in a circular display area. The processor 20 changes arrangement positions of the participant images and changes a shape of the frame surrounding the participant images according to the number of participant images displayed in the frame. The processor 20 may change a shape of the display area of each participant image. For example, the processor 20 changes the arrangement positions of the participant images and the shape of the frame such that a size of an area in the frame is minimized. Taking the frame 36J as an example, when an area occupied by the frame 36J in a case where a shape of the frame 36J is a triangle is smaller than that in a case where a shape of the frame 36J is a rectangle, the processor 20 determines the shape of the frame 36J to be the triangle.

The processor 20 may display the participant image of the participant participating in the online conference as a guest user at an end of the screen 30A, as indicated by the reference numeral 36L. The guest user is, for example, a user whose account information is not registered in the server 10, and who is temporarily permitted to participate in the online conference. The permission is given by an organizer of the online conference, a participant of the online conference, an administrator, or the like.

When the use of the online conference is charged, the processor 20 may display a participant image of a participant who pays a larger amount for the use in a larger size. For example, plural usage amounts are determined, and each user selects the usage amount from the plural usage amounts, pays the usage amount, and participates in the online conference. A predetermined usage amount for each period (for example, a monthly fee) is determined, and the user may participate in the online conference by paying the usage amount.

A rank of the participant (for example, a regular member or a supporting member) may be determined for each usage amount. The processor 20 may display a participant image of a participant having a high rank larger than a participant image of a participant having a low rank. For example, the processor 20 displays a participant image of the regular member larger than a participant image of the supporting member whose rank is lower than that of the regular member.

The processor 20 may change the arrangement positions of the participant images according to the rank. For example, the processor 20 displays the participant image of the participant having the high rank at a position more conspicuous than that of the participant image of the participant having the low rank. Specifically, the processor 20 displays the participant image of the participant having the high rank at a center of the screen 30A, and displays the participant image of the participant having the low rank at an end of the screen 30A.

### (Example 2)

Hereinafter, Example 2 will be described. An online service according to Example 2 is a service for providing content. An attribute of a participant of the online service, that is, an attribute of a user of the content is a position of a virtual seat for watching the content. The processor 20 changes a display mode of the content provided to the participant according to the position of the virtual seat. Here, as an example, the content is a concert or a live performance.

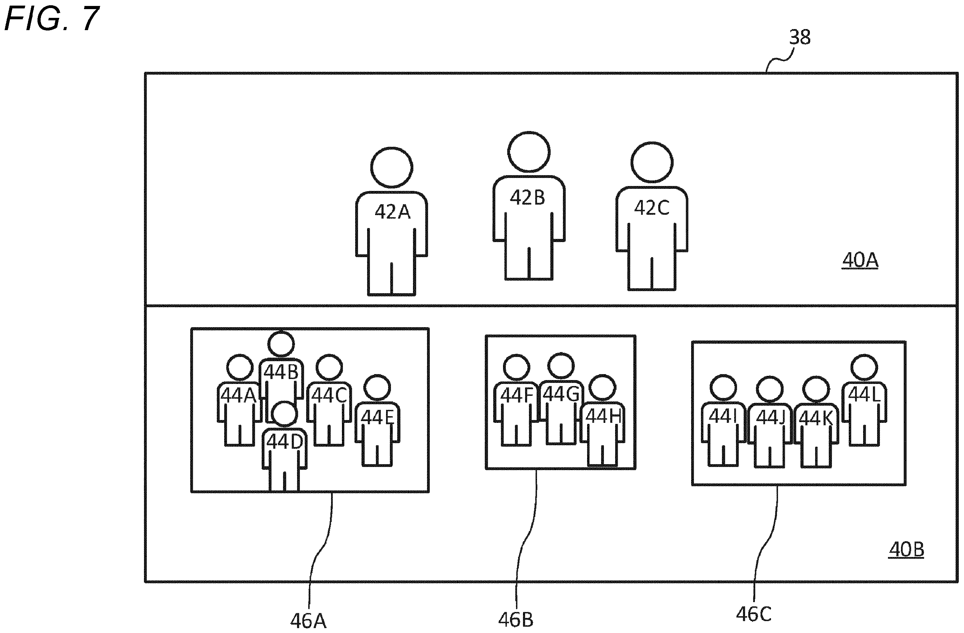

Hereinafter, Example 2 will be described in detail with reference to Fig. 7. Fig. 7 is a view showing a screen 38. For example, when a user who is a spectator of a concert participates in an online service providing a concert or a live performance by operating the terminal device 12, the processor 20 displays the screen 38 on a display of the terminal device 12. The screen 38 includes display areas 40A, 40B. The screen 38 displays a state in a concert venue existing in a real space or a state in a concert venue existing in a virtual space. For example, a moving image is displayed on the screen 38.

Images 42A, 42B, 42C representing concert performers (for example, singers) are displayed in the display area 40A. The concert may be held in the real space or in the virtual space. The performer such as the singer may be a person who actually exists or a virtual person (for example, a character). The display area 40Ais, for example, an area corresponding to a stage. A voice of the concert is emitted from a speaker of the terminal device 12 of a participant (that is, the spectator) of the online service or another speaker. The image displayed in the display area 40A may be a moving image or a still image.

Participant images representing the participants (that is, the spectators) of the online service are displayed in the display area 40B. The display area 40B is, for example, an area corresponding to spectator seats. In the display area 40B, a virtual seat is determined, and a participant image representing a spectator who uses the virtual seat is displayed. Here, as an example, the participant images 44A to 44L are displayed in the display area 40B. For example, a usage fee is determined for each seat, and the spectator may purchase the virtual seat by paying the usage fee and watch the concert via the screen 38.

For example, areas 46A, 46B, 46C are determined as virtual seat areas, and the usage fee for each area is determined. The area 46A is an area set on a left side of the stage. The area 46B is an area set at a center with respect to the stage. The area 46C is an area set on a right side of the stage.

For example, the usage fee of the virtual seat in the area 46B is the highest, the usage fees of the virtual seats in the areas 46A, 46C are the same, which is the second highest.

The participant images (for example, participant images 44A to 44E) of the spectators who have purchased the virtual seats in the area 46A are displayed in the area 46A. The participant images (for example, participant images 44F to 44H) of the spectators who have purchased the virtual seats in the area 46B are displayed in the area 46B. In the area 46C, the participant images (for example, participant images 441 to 44L) of the spectators who have purchased the virtual seats in the area 46C are displayed.

The processor 20 provides the spectator who has purchased the virtual seat in the central area 46B with an image representing a state when the stage of the concert is viewed from the central area 46B. That is, the processor 20 displays the image representing the state when the stage of the concert is viewed from the area 46B on the display of the terminal device 12 of the spectator who has purchased the virtual seat in the area 46B.

The processor 20 displays an image representing a state when the stage of the concert is viewed from the area 46A on the display of the terminal device 12 of the spectator who has purchased the virtual seat in the left area 46A. Similarly, the processor 20 displays an image representing a state when the stage of the concert is viewed from the area 46C on the display of the terminal device 12 of the spectator who has purchased the virtual seat in the right area 46C.

The processor 20 may change the voice of the concert provided to the spectator according to the position of the virtual seat. For example, the processor 20 provides the spectator who has purchased the virtual seat in the central area 46B with a voice heard at the central seat. Specifically, the processor 20 generates the voice heard at the central seat from the speaker used by the spectator who has purchased the virtual seat in the central area 46B.

The processor 20 generates a voice of the concert heard at the left seat from the speaker used by the spectator who has purchased the virtual seat in the left area 46A. Similarly, the processor 20 generates a voice of the concert heard at the right seat from the speaker used by the spectator who has purchased the virtual seat in the right area 46C.

For example, when the concert is held in the real space, a state of the stage is captured from the center, the left side and the right side. Image data generated by capturing from the center is transmitted to the terminal device 12 of the participant who has purchased the virtual seat in the central area 46B, and the image is displayed on the display of the terminal device 12. Image data generated by capturing from the left side is transmitted to the terminal device 12 of the participant who has purchased the virtual seat in the left area 46A, and the image is displayed on the display of the terminal device 12. Image data generated by capturing from the right side is transmitted to the terminal device 12 of the participant who has purchased the virtual seat in the right area 46C, and the image is displayed on the display of the terminal device 12. In this way, the central spectator is provided with the image showing a state in which the concert is viewed from the central seat, the left spectator is provided with the image showing a state in which the concert is viewed from the left seat, and the right spectator is provided with the image showing a state in which the concert is viewed from the right seat. That is, the display mode of the content to be provided is changed for each seat.

The voice of the stage is collected at each of the center, the left side and the right side. Audio data collected from the center is transmitted to the terminal device 12 of the spectator who has purchased the virtual seat in the central area 46B, and is emitted from the speaker used by the spectator. Audio data collected from the left side is transmitted to the terminal device 12 of the spectator who has purchased the virtual seat in the left area 46A, and is emitted from the speaker used by the spectator. Audio data collected from the right side is transmitted to the terminal device 12 of the spectator who has purchased the virtual seat in the right area 46C, and is emitted from the speaker used by the spectator. In this way, the central spectator is provided with the voice of the concert at the center, the left spectator is provided with the voice of the concert on the left side, and the right spectator is provided with the voice of the concert on right side. That is, the provided voice changes for each seat.

The same applies to a case where the concert is held in the virtual space. An image representing a state when the stage is virtually viewed from each of the center, the left side and the right side is displayed on the display of the terminal device 12 of each spectator. A voice virtually heard at the each of central, left and right positions is emitted from the speaker used by the each spectator.

When the spectator who is the participant changes the position of the virtual seat during provision of the content (for example, the concert or the live performance), the processor 20 may change the display mode of the content provided to the spectator according to a position of the changed seat. For example, when the spectator changes the seat, an image representing a state when the stage is viewed from the changed seat and a voice heard at the changed seat are provided to the spectator. The change of the seat is paid or free of charge.

The spectator may be able to post a comment to the content by operating his/her own terminal device 12. The processor 20 displays the posted comment in the display area 40A or the display area 40B in association with information for identifying the spectator who has posted the comment (for example, an account, an ID, a nickname or a name of the participant).

The processor 20 may display the comment of the spectator on the content on the display by changing a priority of the comment of the spectator according to the usage fee of the online service. For example, the processor 20 displays the comment in the display area 40A or the display area 40B with a higher priority for a comment posted by the spectator who has paid a higher usage fee. When posting of the comment itself is charged, the higher a fee paid for the posting of the comment is, the higher the priority is. The processor 20 displays the comment having a higher priority in a more conspicuous manner. For example, the processor 20 displays the comment having the higher priority at the center of the display area 40A or applies a special decoration.

### (Example 3)

Hereinafter, Example 3 will be described. An online service according to Example 3 is an online game. The online game may be referred to as e-sports. A participant of the online service is a player of the online game or a spectator of the online game. When a meaning of the participant is the player, an attribute of the participant is an attribute of the player. When a meaning of the participant is the spectator, an attribute of the participant is an attribute of the spectator.

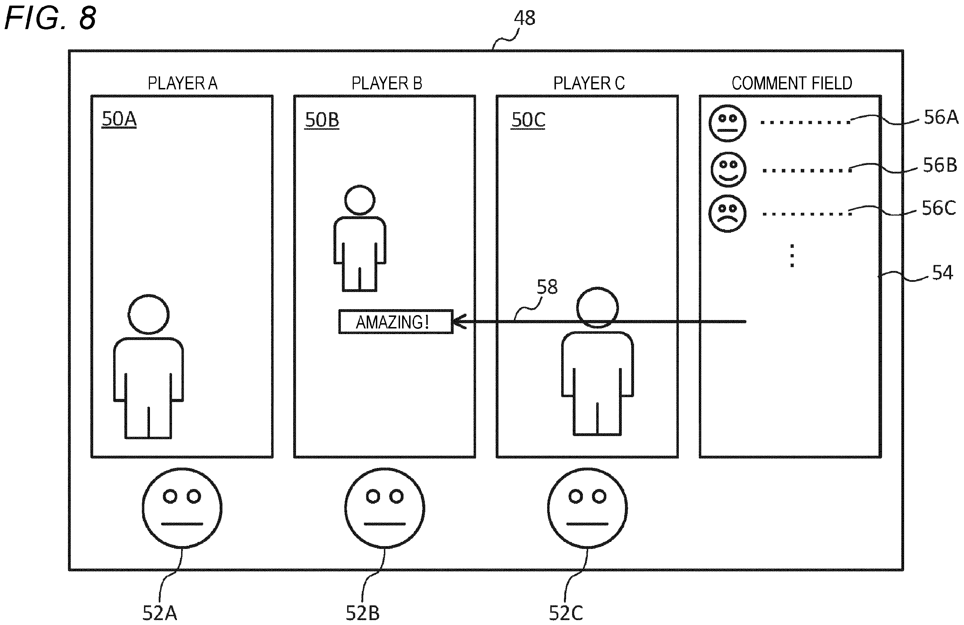

Hereinafter, Example 3 will be described in detail with reference to Fig. 8. Fig. 8 is a view showing a screen 48. The processor 20 displays the screen 48 on a display of the terminal device 12 of each player of the online game and a display of the terminal device 12 of each spectator of the online game.

A user may participate in the online game as the player for a fee or free by operating the terminal device 12. Similarly, the user may participate in the online game as the spectator for a fee or free by operating the terminal device 12.

A type of the online game according to Example 3 is not particularly limited. Examples of the online game include a puzzle game, a fighting game, a racing game, a combat game, a sports game, a simulation game and a role-playing game. Of course, a game of a genre other than these may be the online game according to Example 3.

In the example shown in Fig. 8, three players (for example, players A, B, C) participate in the online game. Operation areas (for example, operation areas 50A, 50B, 50C) of the players are displayed on the screen 48. A play image (for example, a moving image) of the online game is displayed in the operation area. The play image is an image representing an object (for example, a character or another object), a scene or the like operated by the player. For example, when the online game is a fighting game, a character that appears in the fighting game is displayed in the operation area as an object to be operated. When the online game is a racing game, a car, a motorcycle or the like that appear in the racing game is displayed in the operation area as an object to be operated. Specifically, a character or another object operated by the player A is displayed in the operation area 50A. A character or another object operated by the player B is displayed in the operation area 50B. A character or another object operated by the player C is displayed in the operation area 50C. Each player advances the online game while operating the character or another object displayed in his/her own operation area.

Participant images representing the players are displayed on the screen 48. In the example shown in Fig. 8, a participant image 52A representing the player A, a participant image 52B representing the player B, and a participant image 52C representing the player C are displayed on the screen 48. The participant image 52A is displayed in association with the operation area 50A, the participant image 52B is displayed in association with the operation area 50B, and the participant image 52C is displayed in association with the operation area 50C. For example, the participant image 52A is displayed in a vicinity of the operation area 50A, the participant image 52B is displayed in a vicinity of the operation area 50B, and the participant image 52C is displayed in a vicinity of the operation area 50C.

A comment field 54 is displayed on the screen 48. A comment posted by the spectator to the online game is displayed in the comment field 54. The spectator may post the comment to the online game by operating the terminal device 12. The posted comment is displayed in the comment field 54. In the example shown in Fig. 8, a comment 56A posted by a spectator A, a comment 56B posted by a spectator B, and a comment 56C posted by a spectator C are displayed in the comment field 54. For example, each comment is displayed in a chronological order according to a time at which the comment is posted. The participant image representing the spectator who has posted the comment is associated with the comment. For example, a participant image representing the spectator A is displayed in the comment field 54 in association with the comment 56A. The same applies to the participant images representing other spectators.

For example, the processor 20 changes a size, a position, a shape and the like of the operation area of the player according to the attribute of the player. The processor 20 may change the size, position, shape and the like of the operation area of each player according to a relationship between the attributes of the players. Specifically, the processor 20 displays an operation area of a player having a higher score in the online game larger than an operation area of a player having a lower score, or displays the operation area of the player having the higher score at a position more conspicuous than the operation area of the player having the lower score (for example, at a center of the screen 48). The processor 20 may apply a special decoration representing that the player has the higher score to the operation area of the player having the higher score, or may apply a special decoration representing that the player has the lower score to the operation area of the player having the lower score. The score of the player in the online game corresponds to the attribute of the player.

The processor 20 may display an operation area of a player who is in a dominant place in the online game larger than an operation area of a player who is in a subordinate place, or may display the operation area of the player who is in the dominant place in the online game at a position more conspicuous than that of the operation area of the player who is in the subordinate place. The processor 20 may apply a special decoration representing the dominant place to the operation area of the player in the dominant place, or may apply a special decoration representing the subordinate place to the operation area of the player in the subordinate place. The place of the player in the online game (for example, the dominant place or the subordinate place) corresponds to the attribute of the player.

The processor 20 may display an operation area of a player who satisfies a specific condition in the online game (for example, a player who has acquired a specific item, or a player who has acquired a specific point in the online game) larger than an operation area of a player who does not satisfy the specific condition, or may display the operation area at a more conspicuous position.

For example, when a score of the player A is higher than a score of the player B, the processor 20 arranges the operation area 50A of the player A at the center of the screen 48 and arranges the operation area 50B of the player B at an end (for example, a left end) of the screen 48. The same applies to the place of the player and the satisfaction of the specific condition. An arrangement position of the operation area may be determined for each score, or the arrangement position of the operation area may be determined for each place of the player.

Similarly to the operation area, the processor 20 may change a size, a position, a shape, a facial expression and the like of the participant image of the player according to the attribute of the player. For example, the processor 20 may display a participant image of the player having the higher score larger than a participant image of the player having the lower score. The processor 20 may apply a special decoration representing that the player has the higher score to the participant image of the player having the higher score, or may apply a special decoration representing that the player has the lower score to the participant image of the player having the lower score. The same applies to the place of the player and the satisfaction of the specific condition.

The spectator may be able to post a comment to a specific player. For example, as indicated by a reference numeral 58, when the spectator uses the terminal device 12 to move a comment posted by the spectator from the comment field 54 into an operation area (for example, the operation area 50B) of a specific player, the processor 20 displays the comment in a specific area (for example, an area predetermined for displaying the comment) in the operation area 50B. An operation of posting the comment to the specific player may be charged or free of charge. A fee paid by the spectator may change due to a length of the comment or the number of times of posting.

The processor 20 may manage a spectator who has posted a comment to a specific player and the specific player in association with each other. The processor 20 may define the spectator as a fan of the specific player. The processor 20 may determine the spectator who has posted the comment as a specific fan (for example, a hot fan) based on the number of times the comment has been posted to the specific player or a fee paid for posting the comment to the specific player. For example, the processor 20 determines, as the specific fan, a spectator whose number of times of posting comments to a specific player is larger than the number of times of posting by other spectators, a spectator whose number of times of posting is the largest, a spectator whose paid fee is larger than fees paid by other spectators, or a spectator whose paid fee is the largest. The processor 20 may display a participant image of the spectator determined as the specific fan in a large size, or may decorate the participant image of the spectator. The processor 20 may create a ranking of the spectators based on the number of times of posting comments or the fee paid for posting the comment. The ranking may be displayed on the screen 48 or the like.

The processor 20 may display a comment that satisfies a specific condition more conspicuous than a comment that does not satisfy the specific condition. For example, the processor 20 displays the comment that satisfies the specific condition larger than the comment that does not satisfy the specific condition, applies a special decoration to the comment that satisfies the specific condition, or arranges the comment that satisfies the specific condition at a position higher than that of the comment that does not satisfy the specific condition. For example, a comment that supports a player, or a comment has a unique expression of the support is the comment that satisfies the specific condition.

When a specific condition is satisfied in the online game, the processor 20 may combine plural operation areas to create one operation area and display the one operation area on the screen 48. The specific condition is, for example, a case where characters operated by each of plural players approach each other in terms of distance in the online game, or a case where plural players start a specific battle mode. Of course, a condition other than these may be determined as the specific condition. The specific condition may be set by an administrator or the like.

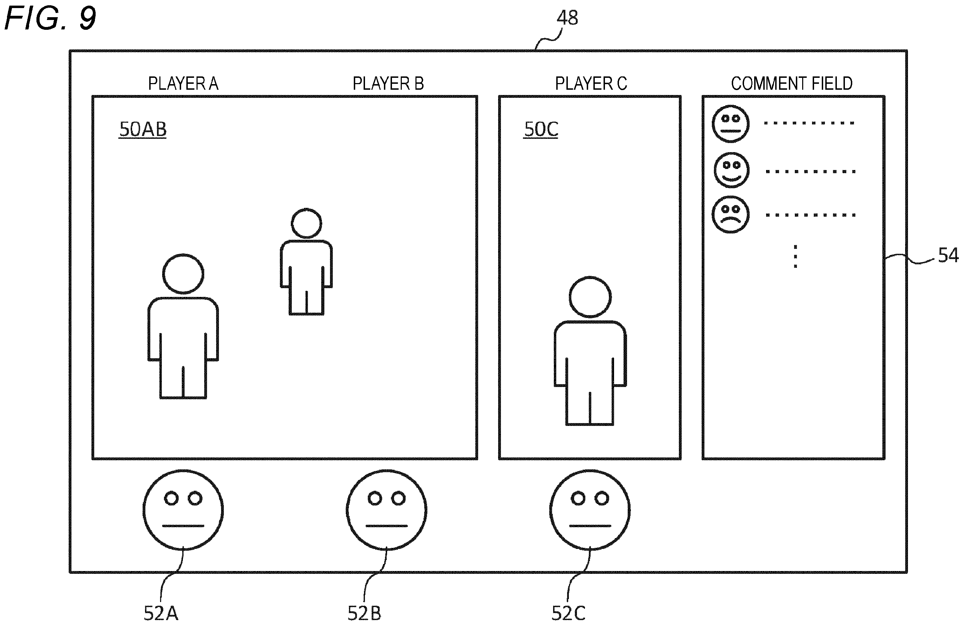

In a specific example, when a character A operated by the player A and a character B operated by the player B approach each other in terms of distance in the online game, the processor 20 combines the operation area 50A of the player A and the operation area 50B of the player B to create one operation area 50AB, and displays the operation area 50AB on the screen 48, as shown in Fig. 9. The characters A, B are displayed in the same operation area 50AB, and the player A operates the character A and the player B operates the character B in the operation area 50AB. For example, in a racing game, when a car operated by the player A (that is, the character A) and a car operated by the player B (that is, the character B) approach each other in terms of distance, the operation areas 50A, 50B are switched to the operation area 50AB. In a role-playing game, a fighting game or the like, when the player A and the player B approach each other in terms of distance, the operation areas 50A, 50B are switched to the operation area 50AB.

### (Example 4)

Hereinafter, Example 4 will be described. An online service according to Example 4 is a service for providing content. An attribute of a participant of the online service, that is, an attribute of a user of the content is a position of a virtual seat for watching the content. The processor 20 changes a display mode of the content provided to the participant according to the position of the virtual seat. Here, as an example, the content is a movie.

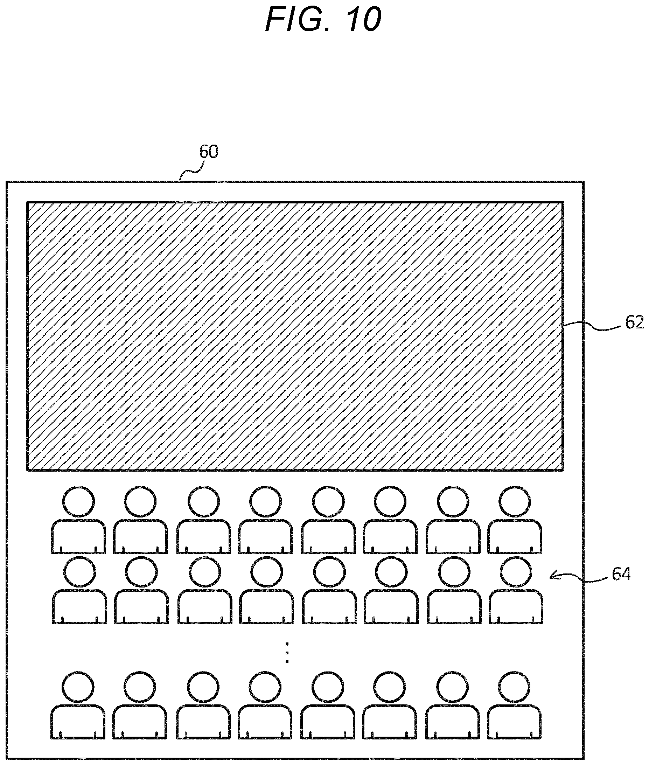

Hereinafter, Example 4 will be described in detail with reference to Fig. 10. Fig. 10 is a view showing a screen 60. For example, when a user who is a spectator of a movie participates in an online service for providing the movie by operating the terminal device 12, the processor 20 displays the screen 60 on a display of the terminal device 12.

The screen 60 includes a display area 62 where a movie image is projected, and a display area 64 corresponding to spectator seats. The display area 62 may be an area representing a screen of the movie or an area representing an image imitating the screen.

In the display area 64, a virtual seat is determined, and a participant image representing a spectator who uses the virtual seat is displayed. As in Example 2, for example, a usage fee is determined for each seat, and the spectator may purchase the virtual seat by paying the usage fee and watch a movie via the screen 60.

As in Example 2, the processor 20 provides the spectator who has purchased the virtual seat in a central area with an image representing a state when the screen of the movie is viewed from the central area. That is, the processor 20 displays the image representing the state when the screen of the movie is viewed from the central area on the display of the terminal device 12 of spectator who has purchased the virtual seat in the central area.

The processor 20 displays an image representing a state when the screen of the movie is viewed from a left area on the display of the terminal device 12 of spectator who has purchased the virtual seat in the left area. The same processing is executed for a right area.

The processor 20 may change a voice of the movie provided to the spectator according to a position of the virtual seat. For example, the processor 20 provides the spectator who has purchased the virtual seat in the central area with a voice heard at a central seat. Specifically, the processor 20 generates the voice heard at the central seat from a speaker used by the spectator who has purchased the virtual seat in the central area. The same processing is executed for a right seat and a left seat.

When the spectator who is the participant changes the position of the virtual seat during provision of the content (for example, the movie), the processor 20 may change the display mode of the content provided to the spectator according to a position of the changed seat. For example, when the spectator changes the seat, an image representing a state when the screen is viewed from the changed seat and a voice heard at the changed seat are provided to the spectator. The change of the seat is paid or free of charge.

### (Example 5)

Hereinafter, Example 5 will be described. An online service according to Example 5 is a service for providing content. An attribute of a participant of the online service, that is, an attribute of a user of the content is a position of a virtual seat for watching the content. The processor 20 changes a display mode of the content provided to the participant according to the position of the virtual seat.

Here, as an example, provision of the content is provision of video and audio of sports performed in a real space. The processor 20 provides the video and audio of the sports to participants of the online service (that is, spectators of the sports) in the online service. The spectator may watch the sports through the video and audio using the terminal device 12.

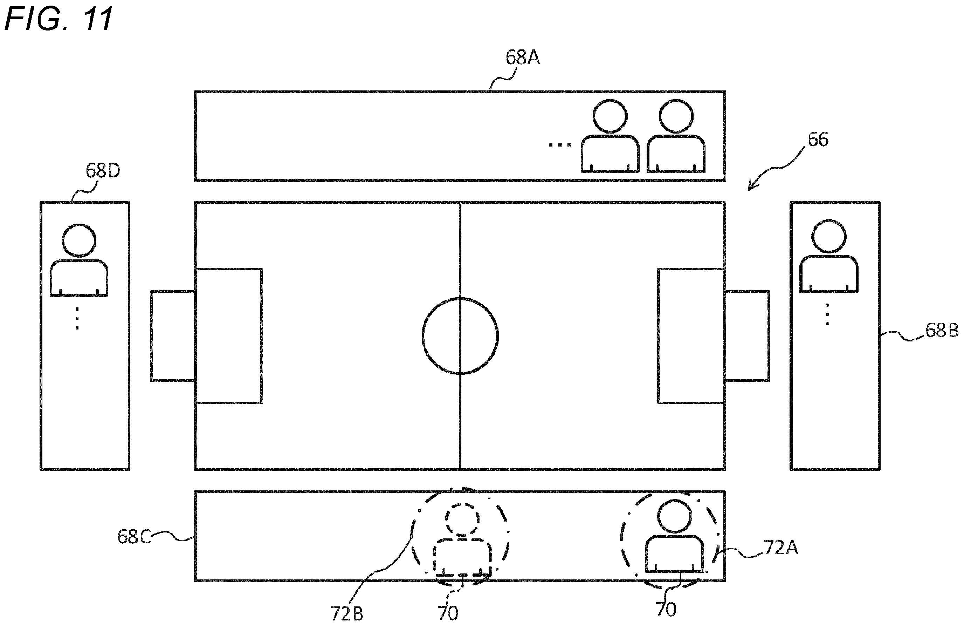

Hereinafter, Example 5 will be described in detail with reference to Fig. 11. Fig. 11 is a view schematically showing a sports stadium. Here, as an example, the sports is soccer.

Fig. 11 schematically shows a ground 66 on which soccer is played, and watching areas 68A, 68B, 68C, 68D arranged so as to surround the ground 66.

In each watching area, a virtual seat is determined, and a participant image representing a spectator who uses the virtual seat is displayed. For example, a usage fee is determined for each seat, and the spectator may purchase the virtual seat by paying the usage fee, and receive provision of the video and audio of the sports in the online service. The schematic stadium and the watching areas shown in Fig. 11 may be displayed on a display of the terminal device 12, and the user may purchase a desired seat with reference to the display content.

As in Example 2, the processor 20 provides the spectator who has purchased the virtual seat in the watching area 68A with an image representing a state when the ground 66 is viewed from the seat. That is, the processor 20 displays the image representing the state when the ground 66 is viewed from the seat on the display of the terminal device 12 of the spectator who has purchased the virtual seat in the watching area 68A. The same applies to the watching areas 68B, 68C, 68D.

As in Example 2, the processor 20 provides a voice heard at the seat to the spectator who has purchased the virtual seat in the watching area 68A. Specifically, the processor 20 generates the voice heard at the seat from a speaker used by the spectator who has purchased the virtual seat in the watching area 68A. The same applies to other watching areas.

When the spectator who is the participant changes the position of the virtual seat during provision of the content (for example, sports relay), the processor 20 may change the display mode of the content provided to the spectator according to a position of the changed seat. For example, when the spectator changes the seat during watching, the processor 20 displays an image corresponding to the changed seat on the display of the terminal device 12 of the spectator. For example, the spectator may change the seat by operating the terminal device 12 to move the participant image representing the spectator himself/herself in the watching area.

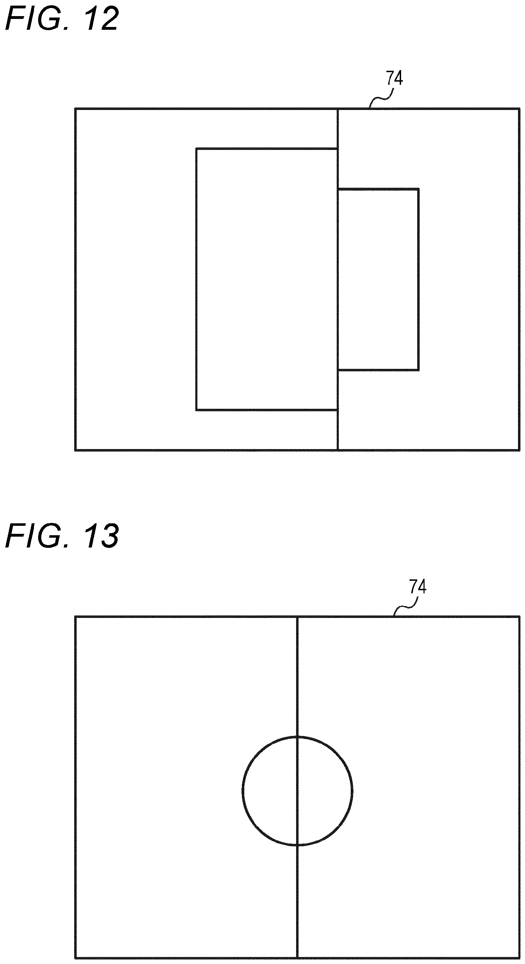

For example, a participant image 70 shown in Fig. 11 is an image representing the user A. When the participant image 70 is displayed on a seat 72A in the watching area 68C, the processor 20 displays an image representing a state when the ground 66 is viewed from the seat 72A on the display of the terminal device 12A of the user A. Fig. 12 shows an example of the image. Fig. 12 shows a screen 74 displayed on the display of the terminal device 12A. The image representing the state when the ground 66 is viewed from the seat 72A (for example, an image representing a vicinity of a goal) is displayed on the screen 74.

After the user A moves his/her own participant image 70 from the seat 72A to a seat 72B in the watching area 68C by operating the participant image 70 (see an arrow in Fig. 11), the processor 20 displays an image representing a state when the ground 66 is viewed from the seat 72B on the display of the terminal device 12A. Fig. 13 shows an example of the image. The image representing the state when the ground 66 is viewed from the seat 72B (for example, an image representing a vicinity of a center line) is displayed on the screen 74 shown in Fig. 13.

In this way, when the participant image is moved as in a case where the spectator moves in the real space, an image representing a state when the ground 66 is viewed from the movement destination changes. The same applies to Examples 2, 4 described above, and when the participant changes the virtual seat, the image and the voice corresponding to the changed seat are provided to the participant. That is, an appearance of the concert or the movie changes.

The processor 20 may also charge the participant an additional fee to change the seat. The participant may change the seat after paying the additional fee, or the additional fee may be generated after the participant changes the seat.

The seat may be provisionally determined. In a stage of the provisional determination, the processor 20 may provide the participant with the image and the voice only for a predetermined time.

Although soccer has been described as an example of the sports, sports other than soccer, for example, sports such as baseball, tennis, golf, swimming, basketball or volleyball may be provided.

In Examples 2, 4, 5, the processor 20 may guide the user to the virtual seat to which the video or audio desired by the user is provided. For example, when the user designates a scene desired by the user using the terminal device 12, the processor 20 displays information indicating a seat in which the scene is obtained on the display of the terminal device 12 of the user. The user may purchase the guided seat and use the online service.

### (Example 6)

Hereinafter, Example 6 will be described. An online service according to Example 6 is a service for providing online shopping. In the service for providing the online shopping, an introducer introduces a product (serving as a concept including the service), and an image and a voice representing the state are provided to a participant of the online service. In the online service, a commentator appears and makes a comment on the product. A comment is also provided by the participant of the online service, and a purchaser of the product or a non-purchaser who is a user who does not purchase the product may also participate in the online service and post a comment. The introducer, the commentator, the purchaser and the non-purchaser are examples of the participants of the online service. A position of the introducer, a position of the commentator, a position of the purchaser, and a position of the non-purchaser respectively correspond to attributes of the participants.

In Example 6, the processor 20 groups the comments of the participants on the product introduced in the online shopping based on the attributes of the participants and displays the comments on a display. For example, the processor 20 displays the comment of the introducer, the comment of the commentator, the comment of the purchaser, and the comment of the non-purchaser on the display so as to be distinguished from each other.

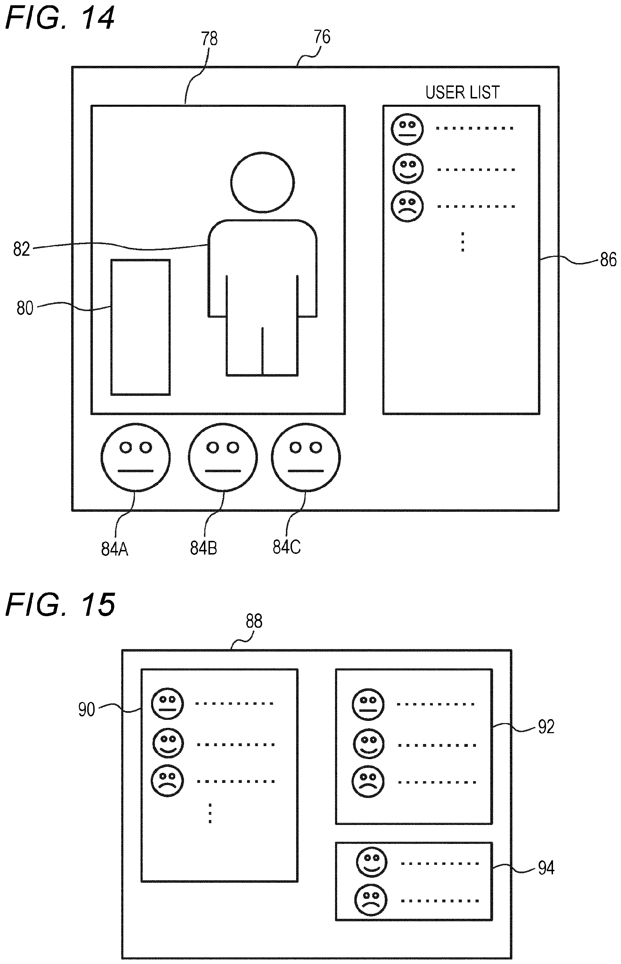

Hereinafter, Example 6 will be described in detail with reference to Figs. 14 and 15.

Fig. 14 shows a screen 76 displayed on the display of the terminal device 12 of the purchaser or the non-purchaser. When the purchaser or the non-purchaser logs in to the service for providing the online shopping using the terminal device 12, the screen 76 is displayed on the display of the terminal device 12.

The screen 76 includes a display area 78. An image (for example, a moving image or a still image) representing a product 80 and an introducer 82 is displayed in the display area 78. A voice of the introducer 82 is emitted from a speaker used by the purchaser or the non-purchaser. An image representing a state in which the introducer 82 introduces the product 80 is displayed in the display area 78, and the voice at that time is emitted from the speaker. The introducer 82 may wear or holds the product.

A participant image representing the commentator is displayed on the screen 76. A participant image 84A is an image representing a commentator A. A participant image 84B is an image representing a commentator B. A participant image 84C is an image representing a commentator C. The comment posted by the commentator is displayed, for example, in the display area 78. The processor 20 may display a participant image of a commentator who is posting a comment larger than a participant image of a commentator who is not posting the comment.

A user list 86 is displayed on the screen 76. Account information of each of the purchaser and the non-purchaser participating in the online shopping service is displayed in the user list 86.

For example, when the purchaser or the non-purchaser operates the terminal device 12 to designate the product 80 displayed in the display area 78 or the product worn by the introducer 82 (for example, click on the screen), the processor 20 displays a list of comments on the designated product on the display of the terminal device 12.

Fig. 15 shows a screen 88 showing the comment fields. As an example, comment fields 90, 92, 94 are displayed on the screen 88. In the comment field 90, a list of comments posted by the commentator is displayed. In the comment field 92, a list of comments posted by the purchaser of the designated product is displayed. In the comment field 94, a list of comments posted by non-purchaser of the designated product is displayed. In this way, the processor 20 displays the comments of the participants on the product by grouping the comments based on the attributes of the participants.

The processor 20 may display the comment field 90 of the commentator more conspicuous than the comment fields 92, 94. For example, the processor 20 may display the comment field 90 larger than the comment fields 92, 94, may arrange the comment field 90 at a central position of the screen 88, or may apply a special decoration to the comment field 90.

The processor 20 may display the comment field 94 of the non-purchaser most inconspicuous. For example, the processor 20 may display the comment field 94 smaller than the comment fields 90, 92, or may display the comment field 94 at an end of the screen 88.

The non-purchaser may determine whether to purchase the product with reference to the comments.

### (Example 7)

Hereinafter, Example 7 will be described. An online service according to Example 7 is an online game. A participant of the online game is a player of the online game. An attribute of the participant is a group, a team, a party or the like to which the player belongs. The processor 20 associates plural players belonging to the same group, the same team or the same party with each other.

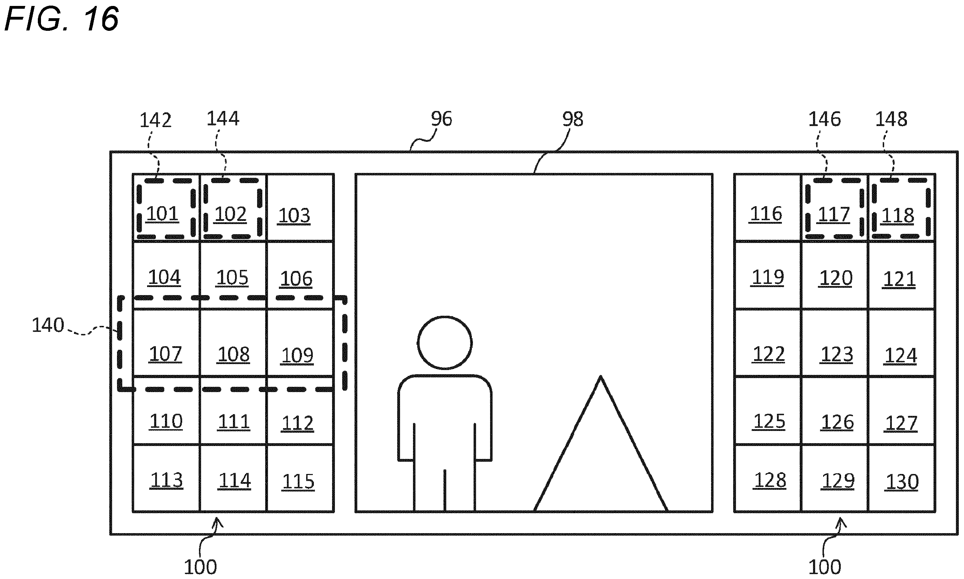

Hereinafter, Example 7 will be described in detail with reference to Fig. 16. Fig. 16 shows a screen 96. The processor 20 displays the screen 96 on a display of the terminal device 12 of each player of the online game.

The screen 96 includes a main display area 98 and two display areas 100. The main display area 98 is an operation area of the player. A play image of the player himself/herself is displayed in real time in the main display area 98. For example, in the main display area 98, an object or a scene to be operated by the player is displayed according to content of the online game. For example, when the user A participates in the online game as the player, a play image of the user A himself/herself is displayed in the main display area 98 displayed on the display of the terminal device 12A of the user A. Similarly, when the user B participates in the online game as the player, a play image of the user B himself/herself is displayed in the main display area 98 displayed on the display of the terminal device 12B of the user B.

The display areas 100 are areas where play images of other players are displayed in real time. For example, the display areas 100 include sub-display areas 101 to 130. The play images of other players participating in the online game at the same time are displayed in real time in the respective sub-display areas. Each sub-display area corresponds to one player.

For example, the play image of the user A is displayed in real time in the main display area 98, and the play image of the user B is displayed in real time in the sub-display area 101. The same applies to the other sub-display areas. The processor 20 displays the main display area 98 larger than the sub-display areas.

When the player loses the game, the processor 20 displays an image indicating that the player has lost the game. For example, when the user B loses the game, the processor 20 displays an image indicating that the user B has lost the game in the sub-display area 101. The same applies to the other players.

In the online game, the processor 20 displays the plural sub-display areas in association with each other on the display of the terminal device 12 based on the attributes of the plural other players. For example, the processor 20 collectively arranges the sub-display areas of the players belonging to the same team. When the players in the sub-display areas 107, 108, 109 belong to the same team, the processor 20 arranges the sub-display areas 107, 108, 109 as one group at positions close to each other. For example, when the sub-display areas 107, 108, 109 are not collectively displayed, the processor 20 collectively arranges the sub-display areas 107, 108, 109. In the example shown in Fig. 16, the sub-display areas 107, 108, 109 are collectively arranged in a line, but a shape of the arrangement is only one example, and the shape of the arrangement may be another shape. The processor 20 may display a frame 140 surrounding the sub-display areas 107, 108, 109. In this example, the team to which the player belongs is the attribute of the player. In this way, the processor 20 changes an arrangement position of the sub-display area of each player according to the team to which the player belongs. The processor 20 may display a character string indicating a team name.

The processor 20 may reflect a result (for example, a rank) of a previous online game in the display area 100. For example, a position surrounded by a frame 142 is a position where a sub-display area of a player of the last first place is arranged, a position surrounded by a frame 144 is a position where a sub-display area of a player of the last second place is arranged, a position surrounded by a frame 146 is a position where a sub-display area of a player of the last third place is arranged, and a position surrounded by a frame 148 is a position where a sub-display area of a player of the last fourth place is arranged. In this example, the previous rank is the attribute of the player, and the processor 20 changes the arrangement position of the sub-display area of each player according to the rank. The processor 20 may display a character string indicating the rank.

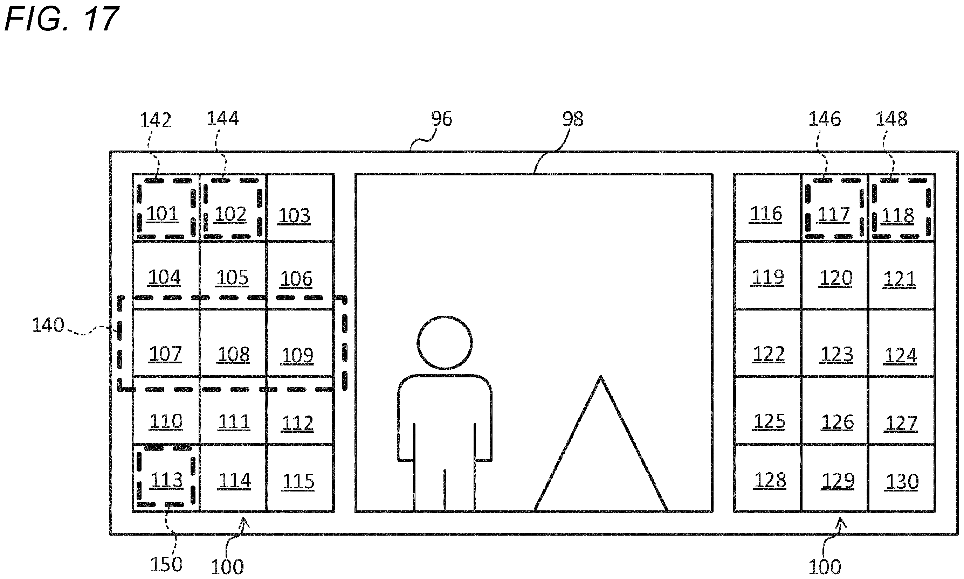

When the rank is determined in the current online game, the processor 20 may arrange the sub-display area at a position corresponding to the rank. In an example shown in Fig. 17, a position surrounded by a frame 150 is a position where a sub-display area of a player of the twentieth place this time is arranged. The processor 20 arranges the sub-display area of the player of the twentieth place in the current online game this time at the position surrounded by the frame 150. The same applies to the other ranks.

The processor 20 may change the arrangement position of the sub-display area of each player according to the number of times of participation in the online game. For example, the arrangement position corresponding to the number of times of participation is determined in advance, and the processor 20 arranges the sub-display area of the player at the arrangement position corresponding to the number of times of participation of the player.

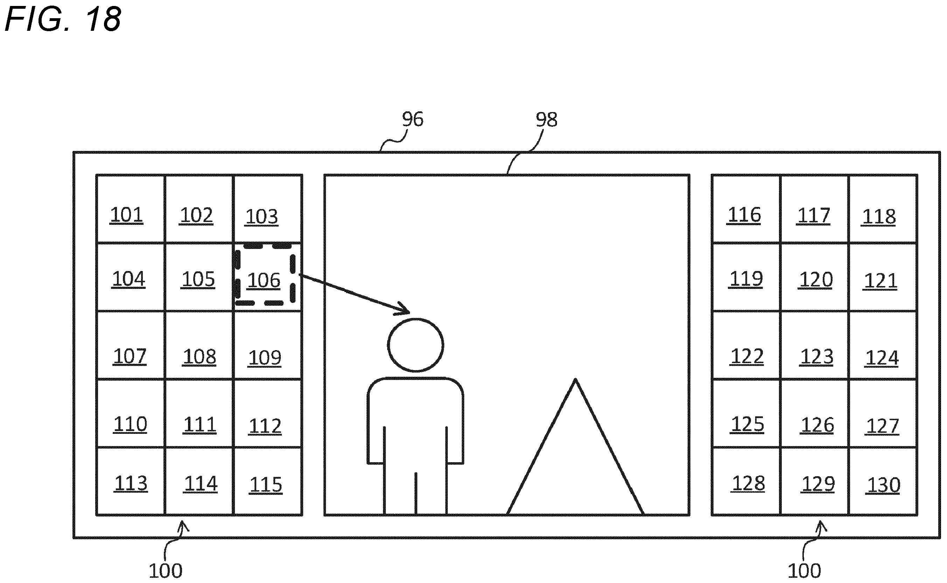

The processor 20 may display a play image displayed in the sub-display area in the main display area 98 according to an operation on the sub-display area. This processing will be described with reference to Fig. 18. Fig. 18 shows the screen 96. For example, when a player whose play image is displayed in the main display area 98 moves a sub-display area into the main display area 98 by operating his/her own terminal device 12 (for example, when a sub-display area is dragged and dropped into the main display area 98), the processor 20 displays a play image of another player displayed in the sub-display area in the main display area 98. For example, when the sub-display area 106 is moved into the main display area 98 as indicated by an arrow in Fig. 18, the processor 20 displays a play image displayed in the sub-display area 106 in the main display area 98. Thereby, the play image of another player displayed in the sub-display area 106 is displayed in a large size. Accordingly, the player may enlarge the play image of another player and confirm a play itself of another player. The play image originally displayed in the main display area 98 is displayed in, for example, the sub-display area 106. As another example, the processor 20 may divide the main display area 98 into plural display areas, and display the play image originally displayed in the main display area 98 and the play image of another player displayed in the sub-display area 106 in the divided display areas. When the sub-display area 106 is designated (for example, when the sub-display area 106 is clicked), the play image displayed in the sub-display area 106 may be displayed in the main display area 98.

The processor 20 may display the screen 96 on the display of the terminal device 12 of the spectator other than the player of the online game. In this case, when the spectator moves the sub-display area to the main display area 98 or clicks the sub-display area, the processor 20 displays the play image displayed in the sub-display area in the main display area 98. Thereby, the spectator may watch the play image of the player of interest by enlarging the play image.

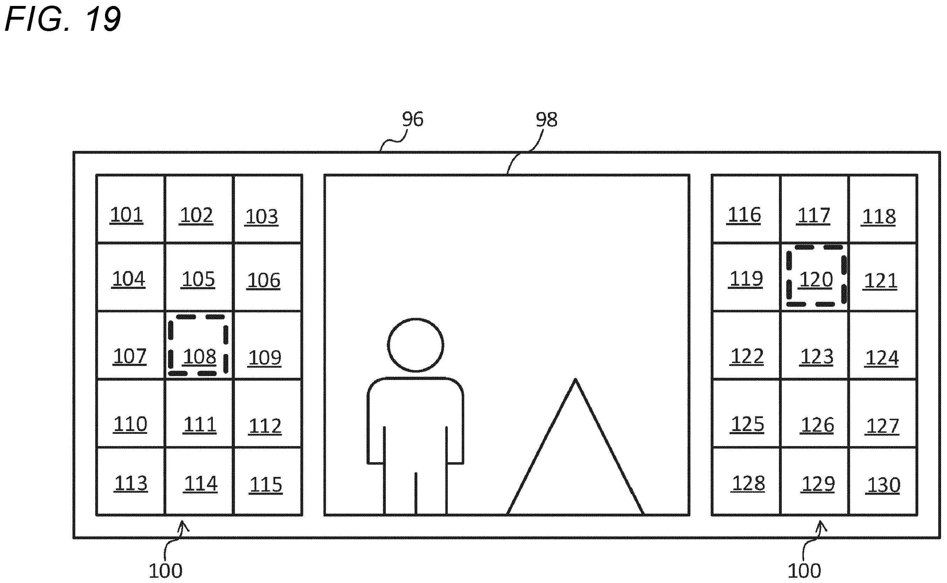

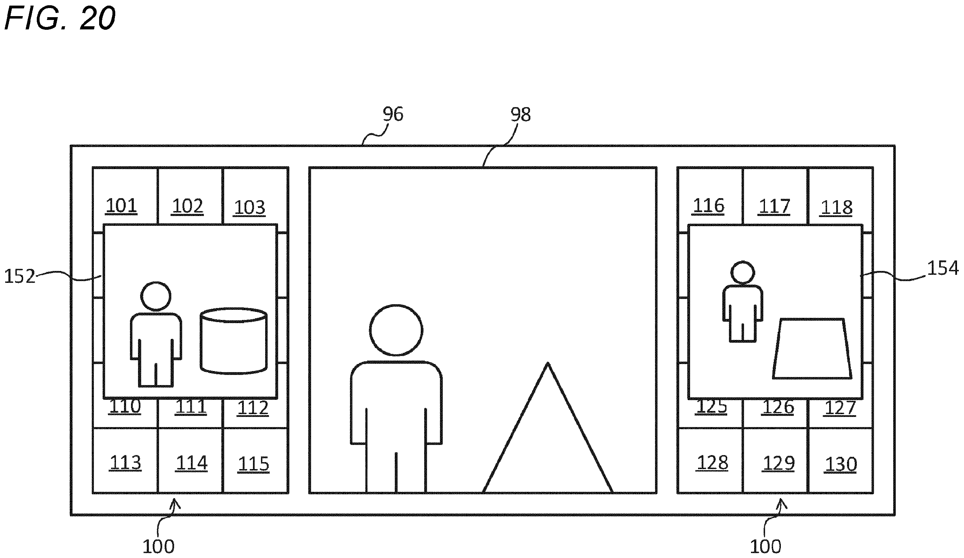

The processor 20 may enlarge the sub-display area designated by the player in the main display area 98 and display the enlarged sub-display area on the screen 96. For example, as shown in Fig. 19, when the sub-display areas 108, 120 are designated, the processor 20 enlarges and displays the sub-display areas 108, 120. For example, when a player whose play image is displayed in the main display area 98 designates the sub-display areas 108, 120 by operating his/her own terminal device 12, the processor 20 enlarges and displays the sub-display areas 108, 120. Fig. 20 shows the enlarged sub-display areas. A sub-display area 152 is an area obtained by enlarging the sub-display area 108, and a sub-display area 154 is an area obtained by enlarging the sub-display area 120. Thereby, the player whose play image is displayed in the main display area 98 may confirm play statuses of specific players in detail. Of course, an administrator or the like may designate the sub-display area to be enlarged.

The processor 20 may rearrange other sub-display areas that are not enlarged within the display area 100 to be even smaller.

When the player in the main display area 98 does not operate the enlarged sub-display area for a predetermined time or longer, the processor 20 may return a size of the enlarged sub-display area to an original size and arrange each sub-display area at an original arrangement position. When the player in the main display area 98 instructs to reduce the sub-display area, the processor 20 may return a size of the sub-display area instructed to be reduced to the original size.

When the sub-display area is enlarged, the processor 20 may control exchange of information between the players such that the player in the main display area 98 and the player in the enlarged sub-display area may exchange messages, calls and the like. The processor 20 may permit the player to perform an action other than information exchange.

The processor 20 may gradually change a display position of an image of a player attacking another player in the online game, or may gradually change a display position of an image of an attacked player. The processor 20 may change an amount of change in the display position of the image of the attacked player according to an amount of damage caused by the attack, or may change a direction of change in the display position of the image of the attacked player according to a direction of the attack.

### (Example 8)

Hereinafter, Example 8 will be described. An online service according to Example 8 is an online conference, and plural participants participate in the online conference. Each participant logs in to the online conference and participates in the online conference by operating his/her own terminal device 12. Images of the participants participating in the online conference are displayed on a display of the terminal device 12 of each participant.

In Example 8, a presentation is given in the online conference. Hereinafter, a participant who is the participant of the online conference and gives the presentation will be referred to as a "speaker". A participant other than the speaker is referred to as a "listener".

The participant who gives the presentation may be registered in the online conference in advance as the speaker, or may be registered as the speaker each time the participant speaks. During the presentation, the listener other than the speaker of the presentation may give the presentation as the speaker.

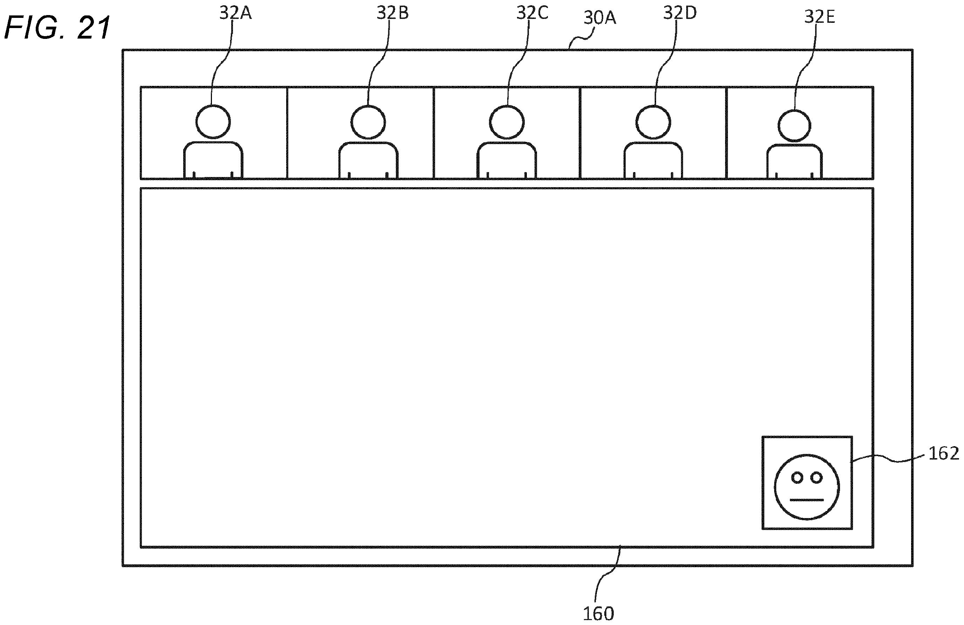

Hereinafter, an example in which one speaker makes the presentation will be described with reference to Fig. 21. Fig. 21 shows the screen 30A. The screen 30A is a screen displayed on the display of the terminal device 12A of the user A participating in the online conference. Plural participants participate in the online conference, and as in the example shown in Fig. 4, a participant image representing each participant is displayed on the screen 30A.

In the example shown in Fig. 21, participant images 32A, 32B, 32C, 32D, 32E are displayed on the screen 30A. On the screen 30A, the participant images of all participants may be displayed, or the participant images of some participants may be displayed.

The screen 30A includes a display area 160. The display area 160 is an area where a material (for example, an image or a character string) used in the presentation is displayed.

A screen similar to the screen 30A is also displayed on the display of the terminal device 12 of the participant other than the user A. The display area 160 is shared by the plural participants, and each participant may receive the same presentation.

For example, a participant image of a listener is displayed in an area outside the display area 160, and a participant image of a speaker is displayed in the display area 160. The participant image of the speaker may be displayed in the display area 160 and may be displayed outside the display area 160. In the example shown in Fig. 21, since there is one speaker, a participant image 162 of the speaker is displayed in the display area 160.

A size of the display area 160 and a size of the area where the participant image of the listener is displayed may be changed by the participant, may be changed by an administrator who has authority to change, or may be determined in advance.

The speaker posts data of a presentation material (for example, image data, character string data or audio data) to the online conference by operating his/her own terminal device 12. The data of the material is transmitted from the terminal device 12 of the speaker to the server 10. The processor 20 of the server 10 transmits the data of the material to the terminal device 12 of each participant of the online conference, and displays the material in the display area 160 displayed on the display of the terminal device 12 of each participant. The data of the material may be stored in the server 10 in advance in association with account information of the speaker. A voice of the speaker is collected by a microphone used by the speaker, and the voice data is output from a speaker used by another participant via the server 10. In this way, the presentation material and statement content of the speaker are shared among the plural participants.

In the present example, a position of the speaker and a position of the listener correspond to attributes of the participants. For example, the processor 20 displays the participant image of the participant as the speaker in the display area 160, and displays the participant image of the participant as the listener outside the display area 160. In this way, the processor 20 changes a display mode (for example, a display position) of the participant image according to the attribute of the participant.

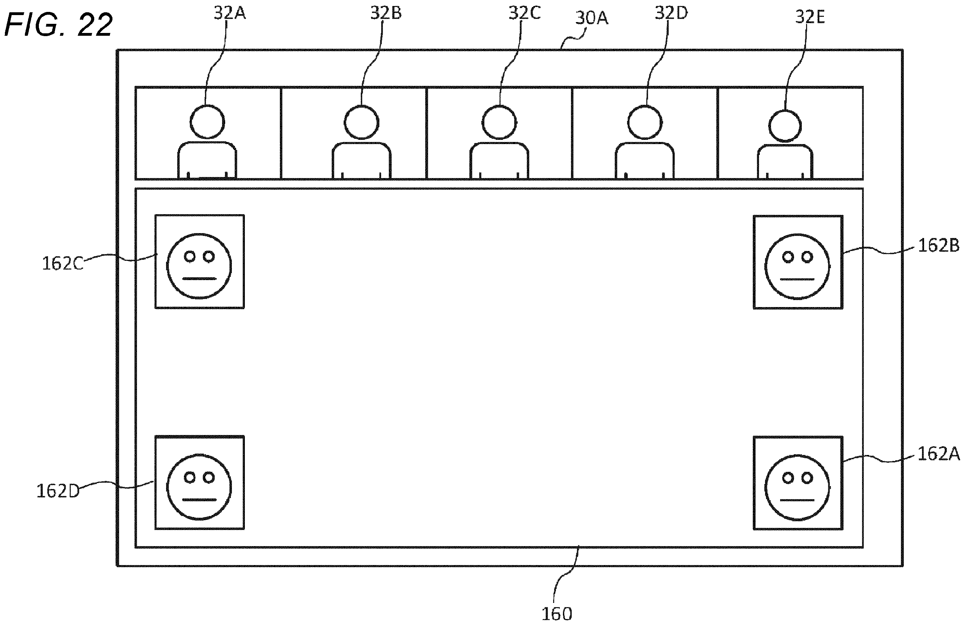

Hereinafter, an example in which plural speakers give the presentation will be described with reference to Fig. 22. Fig. 22 shows the screen 30A.

As an example, four speakers give a presentation, and participant images (for example, participant images 162A, 162B, 162C, 162D) of the four speakers are displayed in the display area 160.

The participant image 162A is an image representing a speaker A. The participant image 162B is an image representing a speaker B. The participant image 162C is an image representing a speaker C. The participant image 162D is an image representing a speaker D. The speakers A, B, C, D are registered in the online conference as speakers. The presentation may be given in a panel discussion format.

An operation on a material displayed in the display area 160 may be performed by each speaker, may be performed by the speaker having operation authority among the four speakers, may be automatically performed, or may be performed by an administrator or the like.

The processor 20 may control an output of a voice of each participant such that only utterances of the speakers A, B, C, D are emitted from the speaker of each participant.

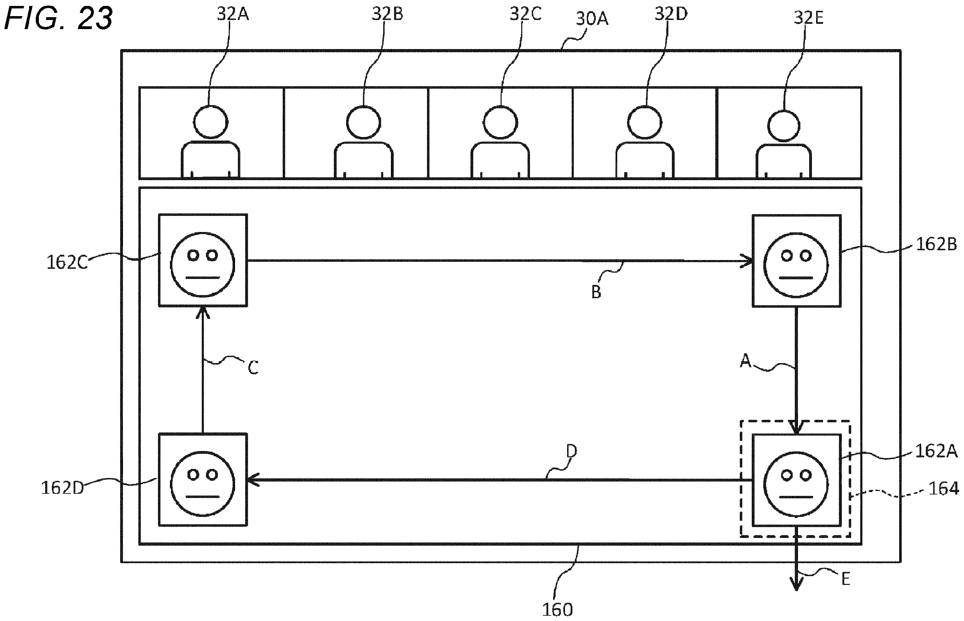

When an order of utterances or presentations of the speaker is determined, the processor 20 may change a display position of the participant image of the speaker according to the order, may hide the participant image of the speaker who has finished speaking or giving the presentation, or may display the participant image of the speaker who has finished speaking or giving the presentation in the area outside the display area 160. Hereinafter, the processing will be described with reference to Fig. 23. Fig. 23 shows the screen 30A.

In an example shown in Fig. 23, the speakers A, B, C, D are registered as the speakers as shown in Fig. 22. The presentation is given in an order of speakers A, B, C, D. The speakers A, B, C, D may give one presentation, or each speaker may give his/her own presentation. The order may be registered in the server 10 in advance. The order of presentation may be determined by the current speaker designating the next speaker. The order may be changed by the speaker or an administrator during the presentation. The order of presentation corresponds to an attribute of participant.

In the display area 160, a specific display area 164 smaller than the display area 160 is provided. The specific display area 164 is an area where the participant image of the current speaker (that is, the participant image of the speaker whose turn has come) is displayed. In the example shown in Fig. 23, the current speaker is the speaker A, and the participant image 162A of the speaker A is displayed in the display area 164.

The processor 20 displays the participant image of the current speaker in the display area 164, and displays the participant images of other speakers in an area other than the display area 164 in the display area 160. The processor 20 may arrange the participant images of the speakers in the display area 160 according to the order of presentation. For example, the participant image 162A of the first speaker A is displayed in the display area 164, the participant image 162B of the second speaker B is displayed at the second corresponding position, the participant image 162C of the third speaker C is displayed at the third corresponding position, and the participant image 162D of the fourth speaker D is displayed at the fourth corresponding position. The position corresponding to the order may be determined in advance, or may be set or changed by the speaker or the administrator. In the example shown in Fig. 23, the participant images 162 of the speakers are displayed at four corners of the display area 160 in the order of presentation.

The processor 20 may change the display position of the participant image 162 of each speaker according to the order of presentation. For example, when the current speaker A finishes his/her own presentation and uses his/her own terminal device 12 to instruct an end of his/her responsibility, information indicating the instruction is transmitted from the terminal device 12 of the speaker A to the server 10. Upon receiving the instruction, the processor 20 of the server 10 advances the order of the speakers other than the speaker A who has finished the presentation by one, and displays the participant images of the speakers other than the speaker A at positions corresponding to the advanced order. As another example, in a case where a presentation holding time of each speaker is set in the server 10 in advance, when the holding time of the speaker A is up, the processor 20 may display the participant images of the speakers other than the speaker A at positions corresponding to the advanced order.

For example, the processor 20 displays the participant image 162B of the second speaker B in the display area 164 where the participant image of the current speaker is displayed as indicated by an arrow A. The processor 20 displays the participant image 162C of the third speaker C at the second corresponding position as indicated by an arrow B. The processor 20 displays the participant image 162D of the fourth speaker D at the third corresponding position as indicated by an arrow C. The processor 20 displays the participant image 162A of the speaker A who has finished the presentation at the fourth corresponding position (that is, the position corresponding to the last in order) as indicated by an arrow D. As another example, the processor 20 may hide the participant image 162A. For example, as indicated by an arrow E, the processor 20 moves the participant image 162A to outside of the display area 160, and then hides the participant image 162A.

When the presentation of the second speaker B is finished, the processor 20 changes the display position of the participant image of each speaker in the same manner as when the presentation of the participant A is finished.

Only the current speaker (that is, the speaker whose participant image is displayed in the display area 164) may be permitted to speak. In this case, the processor 20 generates a voice collected by a microphone used by the current speaker from a speaker used by each participant and does not generate a voice collected by a microphone used by other participants from the speaker used by each participant. Of course, the speakers other than the current speaker or the participants other than the speaker may also be permitted to speak.

When the speaker or the administrator instructs switching of the display position of the participant image of the speaker using the terminal device 12, the processor 20 may change the display position of the participant image of each speaker according to the instruction.

When the presentations of all the speakers are finished, the processor 20 may display the participant images of all the speakers in the display area 160. For example, when the presentation of the last speaker D is finished, the processor 20 displays the participant images 162A, 162B, 162C, 162D again in the display area 160. For example, after the presentation is finished, the speakers may give final last greetings or the like while the participant images of all the speakers are displayed. The processor 20 may collectively display all participant images in the display area 160 before the presentation starts, and then display the participant images at the positions corresponding to the order.

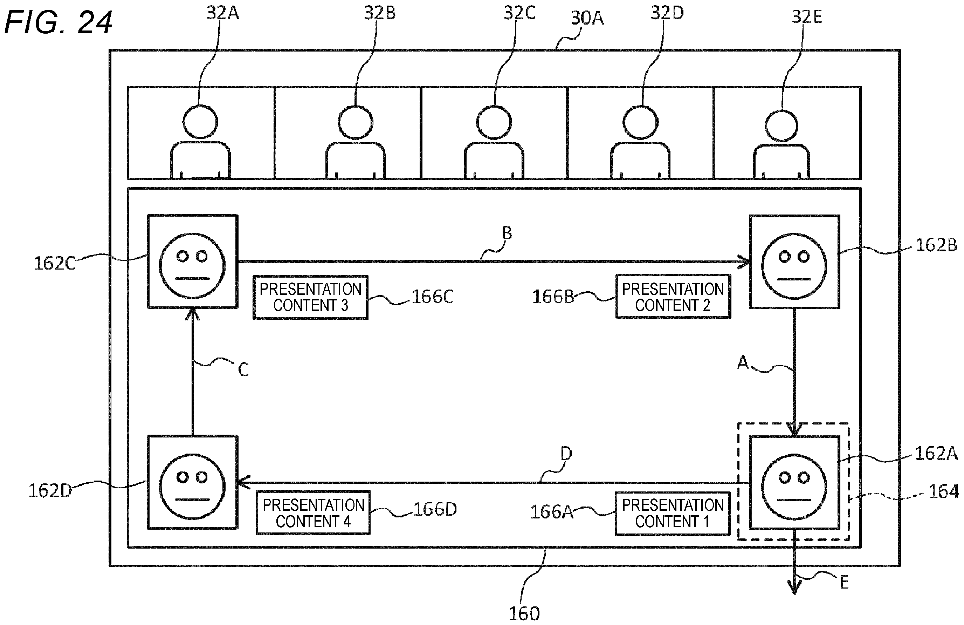

The processor 20 may display an image (for example, a reduced image, a thumbnail image or an icon) associated with the content of the presentation of the speaker (for example, the presentation material) in the display area 160 in association with the participant image of the speaker. Fig. 24 shows this display example.

In Fig. 24, a thumbnail image 166A is an image associated with the content of the presentation of the speaker A, and is displayed near the participant image 162A of the speaker A. A thumbnail image 166B is an image associated with the content of the presentation of the speaker B, and is displayed near the participant image 162B of the participant B. A thumbnail image 166C is an image associated with the content of the presentation of the speaker C, and is displayed near the participant image 162C of the participant C. A thumbnail image 166D is an image associated with the content of the presentation of the speaker D, and is displayed near the participant image 162D of the participant D. The thumbnail image is associated with data related to the content of the presentation (for example, data used for the presentation, such as image data, document data or graphic data). The data related to the content of the presentation is stored in the server 10 in advance.

For example, when the participant instructs display of the content of the presentation of the speaker B by clicking the thumbnail image 166B or the like using his/her own terminal device 12, the processor 20 displays the content of the presentation of the speaker B (for example, an image, a document or a figure) in a part or all of the display area 160 on the display of the terminal device 12 of the participant. Thereby, the participant may confirm the content of the presentation of the speaker B. The same applies to the contents of the presentations of other speakers. For example, the processor 20 displays details of the material used for the presentation. The data of the material may also be downloaded and stored in a storage destination designated by the participant. For example, the processor 20 downloads the material selected by the participant to the storage destination. The thumbnail image of the current participant may not be displayed.

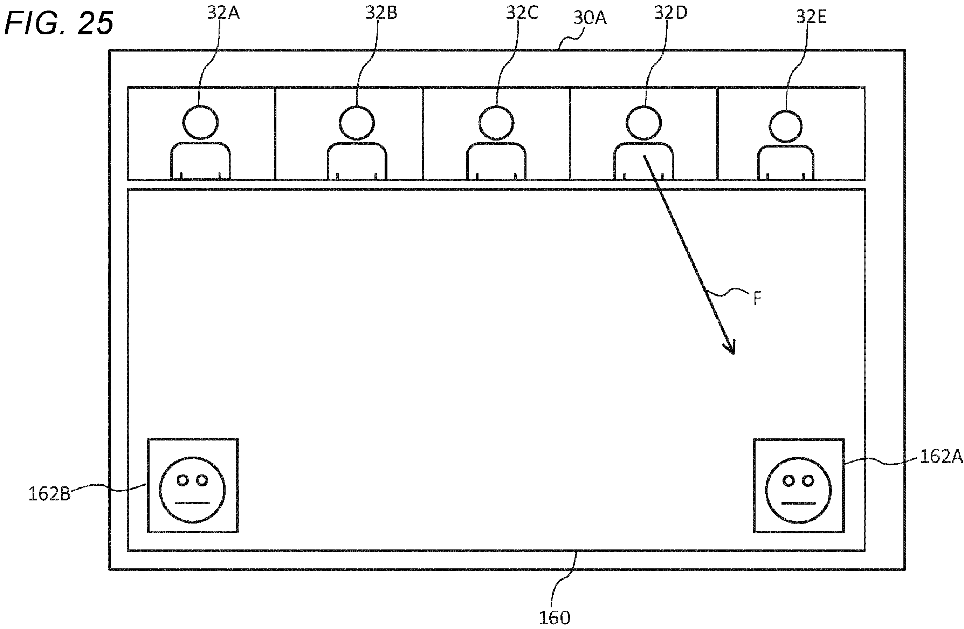

As shown in Fig. 25, when a participant image of a participant (that is, the listener) other than the speaker is moved into the display area 160, the processor 20 may control display or output of a voice such that the participant may interact with the speaker. In an example shown in Fig. 25, the speakers A, B are giving a presentation, and participant images 162A, 162B are displayed in the display area 160. The participant image 32D of the participant D who is the listener is moved into the display area 160 as indicated by an arrow F. For example, the participant image 32D is arranged in the display area 160 by dragging and dropping. This operation may be performed by the participant D using his/her own terminal device 12, or may be performed by the administrator or the speaker using his/her own terminal device 12.

For example, the processor 20 may generate a voice of the participant D from a speaker used by each participant including both the speaker and the listener, or may generate a voice of the participant D from a speaker used by each of the speakers A, B. The processor 20 may permit transmission and reception of image data and character string data only between the terminal devices 12 of each of the speakers A, B and the terminal device 12 of the participant D.

When a participant image of a participant who does not give a presentation is moved into the display area 160, the processor 20 may determine the participant represented by the moved participant image as a participant who gives the presentation (that is, the speaker). In the example shown in Fig. 25, the processor 20 newly registers the participant D as the speaker. That is, the processor 20 may change the attribute of the participant D from "listener" to "speaker". Thereby, the participant D has authority of the speaker. A change of the attribute may be temporary.

In this way, the participant as the listener may interact with the speaker by an intuitive operation.

When the participant image of the speaker is moved to an area other than the display area 160 (for example, an area where the participant image of the listener is displayed), the processor 20 may exclude the speaker from registration as the speaker and newly register the speaker as the listener. In this case, the processor 20 changes the attribute of the speaker from "speaker" to "listener".

### (Example 9)

Hereinafter, Example 9 will be described. An online service according to Example 9 is a distribution service of an online game. The distribution service is a service provided by, for example, a video distribution site, a video distribution platform or the like. This distribution service provides a play image of the online game to a participant of the distribution service. For example, the play image is streaming-distributed, and the online game is live relayed. The participant of the distribution service may participate in the distribution service as a player of the online game, or may participate in the distribution service as a viewer who views a relay of the online play instead of the player. A position as the player and a position as the viewer correspond to attributes of the online service.

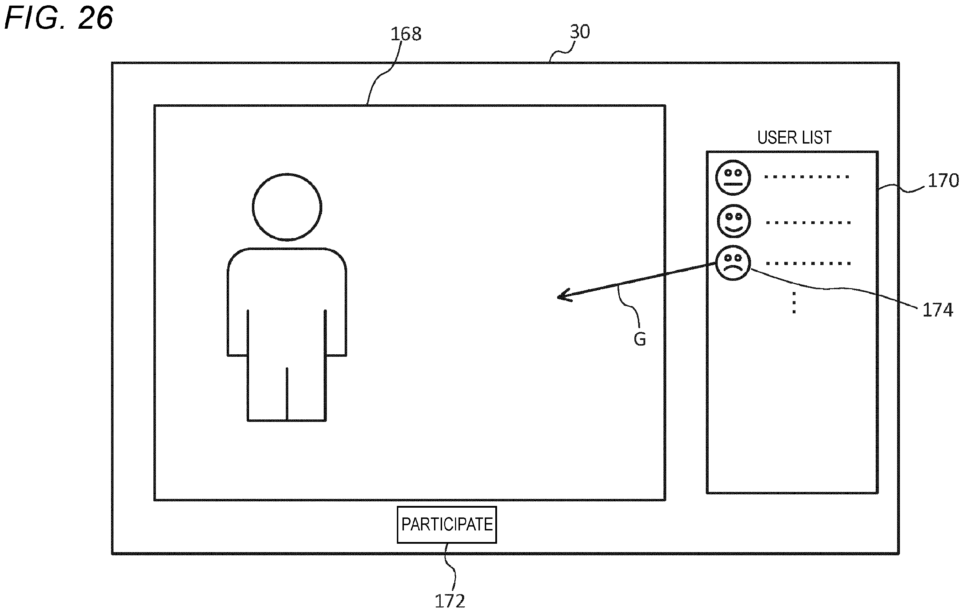

Fig. 26 shows a screen 30 displayed on a display of the terminal device 12 of the participant of the distribution service. The screen 30 includes display areas 168, 170.

The display area 168 is an area where the play image of the online game is displayed. The player may participate in the online game and play the online game by operating his/her own terminal device 12. The play image, which is an image representing the play, is distributed to the terminal device 12 of each participant of the distribution service, and is displayed in the display area 168 of the screen 30 of each terminal device 12.

The display area 170 is an area where a list of participants of the distribution service is displayed. Account information of the viewer is displayed in the display area 170. A participant image of the viewer may be displayed in the display area 170. Account information of the player may be displayed in the display area 170. A comment of each viewer may be displayed in the display area 170.

When the account information or the participant image of the viewer displayed in the display area 170 is moved into the display area 168, the processor 20 allows the viewer to participate in the online game as the player. For example, when the online game to be distributed is a battle-type online game, the processor 20 allows the viewer to participate in the online game as a competitor of the online game.

For example, when a viewer A operates his/her own terminal device 12 to move (for example, drag and drop) the account information of the viewer A indicated by a reference numeral 174 into the display area 168 as indicated by an arrow G, the processor 20 registers the viewer A as the player. The viewer A may participate in the online game as the player. An operation of moving the account information may be performed by an administrator or the like. For example, when the account information is moved into the display area 168 while recruiting players (for example, recruiting opponents, recruiting players to participate in teams, parties and the like), the viewer having the account information participates in the online game as the player.

A button 172 for instructing participation in the online game may be displayed on the screen 30. When the viewer presses the button 172, the processor 20 registers the viewer as the player. When the screen 30 of the viewer who is not permitted to participate in the online game or the online game in which the viewer is not permitted to participate is distributed, the processor 20 may not display the button 172 or may display the button 172 in a gray-out manner.

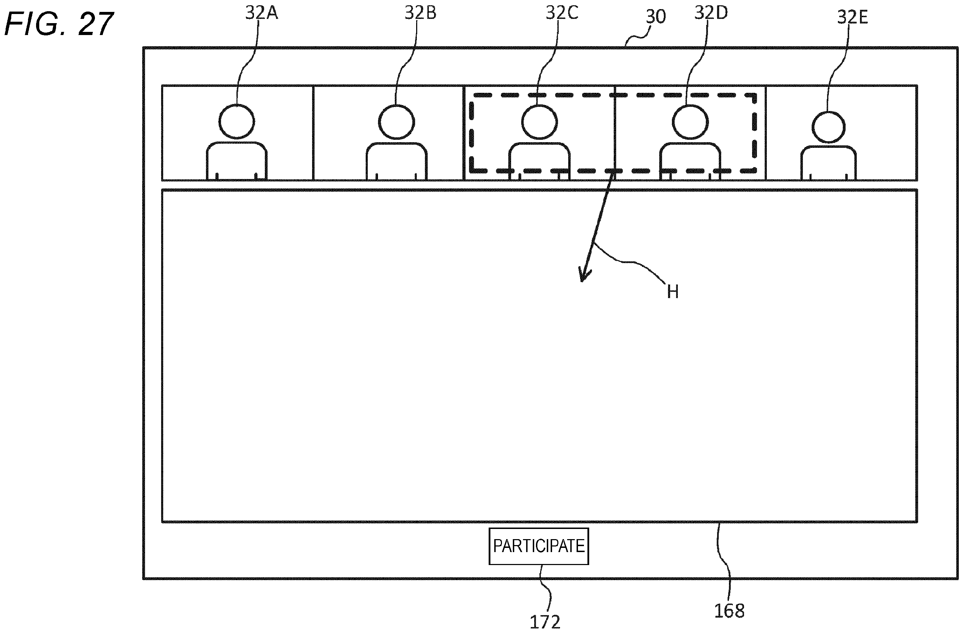

The distribution service according to Example 9 may be provided by a site, an application or the like that provides an online conference or the like, instead of a video distribution site, a video distribution platform or the like. Fig. 27 shows the screen 30 provided in the online conference. On the screen 30, participant images (for example, participant images 32A, 32B, 32C, 32D, 32E and the like) of participants of the online conference are displayed as in Example 1 and the like described above. The screen 30 includes a display area 168, and a play image of an online game is displayed in the display area 168.

For example, when the participant image 32C of the participant C is moved into the display area 168 by dragging and dropping or the like, the processor 20 allows the participant C to participate in the online game as a player.

When the participant images of plural participants are simultaneously designated and moved to the display area 168, the processor 20 may allow the plural participants to participate in the online game as players. In an example shown in Fig. 27, the participant images 32C, 32D are simultaneously designated and moved into the display area 168 as indicated by an arrow H. In this case, the processor 20 allows the participants C, D to participate in the online game as players. When the online game is a battle-type game, the processor 20 may allow the plural participants (for example, the participants C, D) to battle against each other in the online game. The processor 20 may allow the plural participants to participate in the online game as the same team. The processor 20 may allow the plural participants having the same attribute to participate in the online game as the same team.

Also in the example shown in Fig. 27, the button 172 for participating in the online game may be displayed.

When the account information is moved into the display area 168 in the example shown in Fig. 26, when the participant image is moved into the display area 168 in the example shown in Fig. 27, or when the button 172 is pressed, a website for logging in to the online game may be displayed, or an application for login may be activated. When work for login is completed in the website or the application, the processor 20 allows the participant to participate in the online game as the player, and the participant may play the online game.

Address information (for example, URL) of the online game to be distributed, information of the application used for executing the online game, and the like may be set in advance by an administrator or the like. When the participant participates in the online game as the player, the website for logging in to the online game is displayed or the application is executed in according to the address information.

The processor 20 may change a display mode of the button 172 for each participant. For example, the processor 20 may display the button 172 on the display of the terminal device 12 of the participant who has authority to use the online game or the display of the terminal device 12 in which the installation of the application is completed, and may not display the button 172 or display the button 172 in a grayout manner on the display of the terminal device 12 of the participant who does not have the authority to use the online game or on the display of the terminal device 12 in which the installation of the application is not completed. The processor 20 may display a notification for prompting purchase, contract or the like of the online game on the display of the terminal device 12 of the participant who does not have the authority to use the online game.

When a predetermined number of participants or more apply for participation in the online game, a distributor who provides the distribution service may designate the participant who participates in the online game.

The processor 20 may determine the participant who participates in the online game or prompt the participant to participate in the online game based on an attribute of the participant of the distribution service. The attribute is, for example, a battle history in an online game, a team organization history or the like. For example, the processor 20 may determine the player such that the same participant does not participate in the online game continuously, may determine the player such that the participant does not battle against the same opponent continuously, or may determine the player such that the same player does not form a team continuously.

Example 9 may be applied to a distribution service other than the service for distributing the play image of the online game. For example, content or the like in which a plural participants cooperatively operate, work or the like may be distributed to the terminal device 12 of each participant by the distribution service, and the plural participants may cooperatively operate, work or the like on the distribution service.

In the embodiments above, the term "processor" refers to hardware in a broad sense. Examples of the processor include general processors (e.g., CPU: Central Processing Unit), and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An information processing device comprising:
a processor configured to change a display mode provided by an online service in which a plurality of participants participate according to an attribute of each participant of the online service.

2. The information processing device according to claim 1, wherein
the processor displays images of the plurality of participants in association with each other on a display based on the attribute of each participant and changes the association according to the attribute of each participant.

3. The information processing device according to claim 2, wherein
the processor displays, on the display, images of a plurality of participants having attributes related to each other as participants belonging to a same group.

4. The information processing device according to claim 3, wherein
the processor displays the images of the plurality of participants belonging to the same group in a same display area.

5. The information processing device according to claim 3 or 4, wherein
the processor changes a display mode of the images of the participants according to a relationship among the attributes of the participants belonging to the same group.

6. The information processing device according to any one of claims 3 to 5, wherein
the processor displays an image of a participant who transmits information and an image of a participant who does not transmit information on the display so as to be distinguished from each other in the images of the plurality of participants belonging to the same group.

7. The information processing device according to claim 6, wherein
the processor displays the image of the participant who transmits information on the display in a manner more conspicuous than a manner in which the image of the participant who does not transmit information is displayed.

8. The information processing device according to any one of claims 2 to 7, wherein
the processor displays an image of a non-participant who is registered in the online service but is not participating in the online service and an image of a participant of the online service on the display so as to be distinguished from each other.

9. The information processing device according to any one of claims 2 to 8, wherein
the processor arranges the images of the participants at positions closer to each other for the participants whose attributes are more highly related to each other.

10. The information processing device according to claim 2, wherein
the processor arranges images of groups at positions closer to each other for the groups whose attributes are higher related.

11. The information processing device according to claim 1, wherein
the online service is a service for providing a content,
the attribute of the participant is a position of a virtual seat for watching the content, and
the processor changes a display mode of the content to be provided to the participant according to the position of the virtual seat.

12. The information processing device according to claim 11, wherein
the processor displays, on the display, a comment of the participant on the content with a different priority according to a usage fee of the online service paid by the participant.

13. The information processing device according to claim 11, wherein,
when the participant changes the position of the virtual seat while the content is being provided, the processor changes the display mode of the content provided to the participant according to a changed position of the virtual seat.

14. The information processing device according to claim 3, wherein
the online service is a service for providing online shopping, and
the processor displays, on the display, a comment of the participant on a product introduced in the online shopping, the comment being grouped based on the attribute of the participant.

15. The information processing device according to any one of claims 1 to 14, wherein
the processor changes sound to be provided to a participant according to an attribute of the participant.

16. The information processing device according to claim 1, wherein
the online service is an online game, and
the processor displays, on the display, a main display area where a play image of a player who is a participant of the online game is displayed and a plurality of sub-display areas where play images of a plurality of other players who are other participants are displayed, and displays, on the display, the plurality of sub-display areas in association with each other based on attributes of the plurality of other participants.

17. The information processing device according to claim 16, wherein,
in response to an operation on a sub-display area, the processor further displays the play image displayed in the sub-display area in the main display area.

18. The information processing device according to claim 16 or 17, wherein,
in response to a designation of a sub-display area, the processor further enlarges the sub-display area that is designated and display the enlarged sub-display area.

19. The information processing device according to claim 1, wherein,
in the online service, a plurality of participants give a presentation in order, and
the processor displays, on the display, an image of each participant who gives the presentation in a display area where the image of the participant who gives the presentation is displayed, and changes a position where the image of each participant who gives the presentation is displayed according to the order.

20. The information processing device according to claim 19, wherein
the processor displays an image of a participant who is currently giving a presentation in a specific display area on the display, and changes the image of the participant displayed in the specific display area according to the order.

21. The information processing device according to claim 19 or 20, wherein,
in response to an image of a participant who is not giving the presentation being moved to the display area where the image of the participant who gives the presentation is displayed, the processor determines the participant of the moved image as a participant who gives the presentation.

22. The information processing device according to claim 19, wherein
the processor displays a thumbnail image of a material to be presented by the participant near the image of the participant who gives the presentation.

23. The information processing device according to claim 22, wherein,
in response to the thumbnail image being selected, the processor displays details of the material or downloads the material.

24. The information processing device according to claim 1, wherein
the online service is a distribution service of an online game, and,
in response to information on a viewer of the online game being moved to an area where a play image of the online game is displayed on the display, the processor registers the viewer as a player of the online game.

25. A program causing a computer to execute a process comprising:
changing a display mode provided by an online service in which a plurality of participants participate according to an attribute of each participant of the online service.
